# EUROPEAN PATENT APPLICATION

(11) **EP 2 391 152 A1**
(43) Date of publication of application: **30.11.2011**
(21) Application number: 11178343.7
(22) Date of filing: 31.07.2009
(51) Int. Cl.: H04W 16/10, H04L 12/56

(54) **Resource Partitioning in Heterogeneous Access Point Networks**

(30) Priority: 31.07.2008 US 85256 P; 29.07.2009 US 511895
(62) Divisional of application: 09791080.6
(71) Applicant: Qualcomm Incorporated, San Diego CA 91121-1714 (US)
(72) Inventor: The designation of the inventor has not yet been filed
(74) Representative: Loveless, Ian Mark

(57) **Abstract**

Providing for dynamic resource provisioning in wireless communication is described herein. By way of example, various wireless performance metrics are collected by respective network access points as an aggregate measure of wireless network performance. Aggregated data can be utilized to generate a performance model for the network and for individual access points. Changes to the data are updated to the model to provide a steady-state characterization of network performance. Wireless resources are generated for respective access points in a manner that optimizes wireless performance. Additionally, resource assignments can be updated at various intervals to re-optimize for existing wireless conditions, whether event driven or based on performance metrics. Accordingly, a robust and dynamic optimization is provided for wireless network resource provisioning that can accommodate heterogeneous access point networks in a changing topology.

## Description

### Claim of Priority under 35 U.S.C. §119

The present Application for Patent claims priority to U.S. Provisional Application No. 61/085,256 entitled RESOURCE PARTITIONING IN HETEROGENEOUS NETWORKS filed July 31, 2008, assigned to the assignee hereof and expressly incorporated by reference herein.

### BACKGROUND

### I. Field

The following relates generally to wireless communication, and more specifically to dynamic allocation of wireless resources to facilitate optimal conditions for steady-state wireless communications.

### II. Background

Wireless communication systems are widely deployed to provide various types of communication content such as, *e.g*., voice content, data content, and so on. Typical wireless communication systems can be multiple-access systems capable of supporting communication with multiple users by sharing available system resources (*e.g*., bandwidth, transmit power). Examples of such multiple-access systems can include code division multiple access (CDMA) systems, time division multiple access (TDMA) systems, frequency division multiple access (FDMA) systems, orthogonal frequency division multiple access (OFDMA) systems, and the like.

Generally, wireless multiple-access communication systems can simultaneously support communication for multiple mobile devices. Each mobile device can communicate with one or more base stations via transmissions on forward and reverse links. The forward link (or downlink) refers to the communication link from base stations to mobile devices, and the reverse link (or uplink) refers to the communication link from mobile devices to base stations. Further, communications between mobile devices and base stations can be established *via* single-input single-output (SISO) systems, multiple-input single-output (MISO) systems, multiple-input multiple-output (MIMO) systems, and so forth.

Wireless messages are typically sub-divided in time, frequency, according to codes, and so on, to coordinate communication between access point and access terminal, and to reduce interference between multiple concurrent transmissions. For instance, in an orthogonal frequency division multiple access (OFDMA) system, forward link messages are segmented into time and frequency subdivisions. As one example, a signal can be considered two-dimensional comprising time and frequency, and segmented into multiple frequency sub-bands, and multiple time sub-frames. Each time-frequency sub-division is considered a resource of the OFDMA wireless signal. Furthermore, sets of resources can be configured to carry particular data. For instance, in each time sub-frame, frequency sub-bands at the edge of a spectrum bandwidth can be blanked to reduce cross-talk (guard bands); one set of sub-bands can be reserved for acquisition and control information, another set can be reserved for traffic data, and so on. By analyzing particular frequencies, a wireless access terminal (AT) receiving the signal can extract the acquisition and control information from the signal, ignore irrelevant user traffic, and the like.

Different wireless resources in a multiple access communication environment are segmented so as to be orthogonal to each other. In other words, different resources can include different frequency bands, code division spread factors, symbols, antenna gain, *etc*., that result in interference mitigation with respect to other such resources (*e.g*., *via* destructive interference). This reduced interference enables multiple devices to transmit at the same or similar times, increasing load capability of wireless networks.

Signal interference can result from essentially static factors (*e.g*., base station topology or scattering from surrounding landscape) as well as dynamic factors (*e.g*., mobile device population, atmospheric conditions, and so on). Long-term macroscopic optimizations can often be successful to counter static interference conditions. However, dynamic conditions are more difficult to correct merely by deployment optimization (*e.g*., positioning of base stations, directional gain, *etc*.).

Recent advancements in wireless communications have seen various types of base stations deployed within common service areas (*e.g*., high, low, or mid power base stations, restricted access or general access base stations, and so forth), resulting in a heterogeneous access point network. Although such networks can be useful to provide different kinds of wireless services for different subscribers, additional complexities can result. For instance, typical interference reduction techniques that work well for planned, homogeneous base station deployments may not be as effective in unplanned or heterogeneous access point networks. Furthermore, where low power and restricted access base stations can be deployed by third parties or end-users, base station topology can be diverse and frequently changing. Accordingly, optimizations that consider dynamic network conditions would provide better signal to interference ratios in such environments.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

The subject disclosure provides for dynamic resource provisioning for wireless communication. Various wireless performance metrics are collected by respective network access points as an aggregate measure of wireless network performance. Aggregated data can be utilized to generate a performance model for the network and for individual access points. Changes to the data are updated to the model to provide a steady-state characterization of network performance. Wireless resources can be reserved or assigned to respective access points in a manner that optimizes a performance parameter of the model (*e.g*., throughput, latency, *etc*., or various combinations of parameters). In some aspects of the subject disclosure, resource optimization is based on a given state of the model for a given state of dynamic conditions. In other aspects, a closed loop system is provided wherein changes in performance as a result of updated resource assignments can be fed back to the model for re-optimization. Additionally, various update times are provided for determining existing wireless conditions, whether event driven or periodic, or based on at least in part on performance metrics. Accordingly, a robust and dynamic optimization is provided for wireless network resource provisioning that can accommodate heterogeneous access point networks.

In other aspects of the subject disclosure, provided is a method for dynamic resource partitioning in wireless communication. The method can comprise employing a communication interface to obtain a performance metric for a wireless network access point and employing a data processor to update inputs to a network utility model with the performance metric, wherein the utility model is a function of resource partitioning and performance metrics of a set of wireless links at least in part involving the access point. Furthermore, the method can comprise employing the data processor to select a resource partitioning for the wireless network access point that optimizes a network utility parameter of the model.

In one or more other aspects, disclosed is an apparatus that provides dynamic resource partitioning for a wireless network. The apparatus can comprise a network interface module for obtaining network performance metric data. Further, the apparatus can comprise memory for storing a set of modules configured to dynamically partition wireless resources among a set of wireless access points and AT links, and a data processor for executing the modules. Specifically, the set of modules can comprise a collection module that aggregates network performance data provided by respective wireless access points of the set and a perturbation module that modifies a resource assignment for at least one of the respective access points based on the performance data, where the modified assignment is transmitted to the at least one access point for implementation.

In other disclosed aspects, the subject disclosure provides for an apparatus for dynamic resource partitioning in wireless communication. Specifically, the apparatus comprising means for employing a communication interface to obtain loading information for a wireless network access point and means for employing a data processor to update inputs to a network utility model with the performance information, wherein the utility model is a function of resource partitioning and performance metrics of a set of wireless links at least in part involving the access point. The apparatus can further comprise means for employing the data processor to select a resource partitioning for the wireless network access point that optimizes a network utility parameter of the model.

In other aspects, provided is at least one processor configured for dynamic resource partitioning in wireless communication. The processor(s) can comprise a first module for obtaining performance information for a wireless network access point and a second module for updating inputs to a network utility model, wherein the utility model is a function of resource partitioning and performance metrics of a set of wireless links at least in part involving the access point. Moreover, the processor(s) can comprise a third module for selecting a resource partitioning for the wireless network access point that optimizes a network utility parameter of the model.

In at least one aspect, the subject disclosure provides a computer program product comprising a computer-readable medium. The computer-readable medium can comprise a first set of codes for causing a computer to obtain performance information for a wireless network access point. Moreover, the computer-readable medium can comprise a second set of codes for causing the computer to update inputs to a network utility model, wherein the utility model is a function of resource partitioning and performance metrics of a set of wireless links at least in part involving the access point. The computer-readable medium can also comprise a third set of codes for causing the computer to select a resource partitioning for the wireless network access point that optimizes a network utility parameter of the model.

According to additional aspects of the subject disclosure, provided is a method for wireless communications. The method can comprise employing a wireless receiver to obtain a modification to wireless resources assigned to an access terminal (AT) by a wireless network. The method can further comprise employing a data processor to sample performance data for the modified wireless resource assignment based on RF conditions observed at the AT. Moreover, the method can comprise employing a wireless transmitter to submit the sampled performance data to a BS of the wireless network, wherein a response to the submission reverts the AT to a pre-modified wireless resource assignment, or maintains the modified assignment, based at least in part on the sampled performance data.

In at least one aspect, disclosed is an apparatus for facilitating improved wireless communication. The apparatus can comprise a memory that stores a set of modules configured to provide dynamic resource assignment for a wireless network. Moreover, the apparatus can comprise a data processor for executing the set of modules. Particularly, the set of modules comprises a resource module that analyzes a received wireless message to identify changes in wireless resource assignments sent by a serving wireless network, a configuration module that tunes a transceiver of the apparatus according to changes identified by the resource module, and a measurement module that samples performance data based on RF conditions observed at the apparatus and facilitates performance evaluation of the changed wireless resources.

According to still other aspects, the subject disclosure provides an apparatus for wireless communications. The apparatus can comprise means for employing a wireless receiver to obtain a modification to wireless resources assigned to an AT by a wireless network and means for employing a data processor to sample performance data for the modified wireless resource assignment based on RF conditions observed at the AT. Additionally, the apparatus can comprise means for employing a wireless transmitter to submit the sampled performance data to a BS of the wireless network, wherein a response to the submission reverts the AT to a pre-modified wireless resource assignment, or maintains the modified assignment, based at least in part on the sampled performance data.

In yet other aspects, disclosed is at least one processor configured for improved wireless communication. The processor(s) can comprise a first module that obtains a modification to wireless resources assigned to an AT by a wireless network. The processor(s) can further provide a second module that samples performance data for the modified wireless resource assignment based on RF conditions observed at the AT. Moreover, the processor(s) can comprise a third module that submits the sampled performance data to a BS of the wireless network, wherein a response to the submission reverts the AT to a pre-modified wireless resource assignment, or maintains the modified assignment, based at least in part on the sampled performance data.

In additional aspects, the subject disclosure provides a computer program product comprising a computer-readable medium. The computer-readable medium can further comprise a first set of codes for causing a computer to obtain a modification to wireless resources assigned to an AT by a wireless network. Additionally, the computer-readable medium can comprise a second set of codes for causing the computer to sample performance data for the modified wireless resource assignment based on RF conditions observed at the AT. The computer-readable medium can also comprise a third set of codes for causing the computer to submit the sampled performance data to a BS of the wireless network, wherein a response to the submission reverts the AT to a pre-modified wireless resource assignment, or maintains the modified assignment, based at least in part on the sampled performance data.

According to still other aspects of the subject disclosure, disclosed is a computer-implemented method for dynamic resource partitioning. The computer-implemented method can comprise employing a communication interface for obtaining an existing resource partitioning for a set of wireless links and employing a data processor for perturbing the existing resource partitioning for a subset of the wireless links and pushing the perturbation to one or more access points supporting the subset of links. Additionally, the computer-implemented method can comprise employing the communication interface for obtaining performance metrics from respective access points indicative of the perturbed resource partitioning and employing the data processor for comparing the performance metrics with pre-perturbed network metrics. Moreover, the computer-implemented method can comprise employing the data processor for selecting to retain the perturbed partitioning, further perturb the partitioning or revert to pre-perturbed resource partitioning based on the performance metric comparison.

In other aspects, the subject disclosure provides an apparatus that provides dynamic resource partitioning for a wireless network. The apparatus can comprise a network interface module for obtaining network performance metric data for a set of wireless links. Additionally, the apparatus can comprise memory for storing a set of modules configured to dynamically partition wireless resources among the set of wireless links. Furthermore, the apparatus can comprise a data processor for executing the modules. Specifically, the set of modules can comprise a perturbation module that modifies a resource assignment for at least one of the respective wireless links, a collection module that aggregates network performance data for the modified resource assignment and a comparison module that outputs a resource assignment based on comparison of perturbed and pre-perturbed network performance data.

According to yet other aspects, provided is an apparatus for dynamic resource partitioning. The apparatus can comprise means for employing a communication interface for obtaining an existing resource partitioning for a set of wireless links. Additionally, the apparatus can comprise means for employing a data processor for perturbing the existing resource partitioning for a subset of the wireless links and pushing the perturbation to one or more access points supporting the subset of links. In at least some aspects, the apparatus can further comprise means for employing the communication interface for obtaining performance metrics from respective access points indicative of the perturbed resource partitioning and means for employing the data processor for comparing the performance metrics with pre-perturbed network metrics. Further to the above, the apparatus can comprise means for employing the data processor for selecting to retain the perturbed partitioning, further perturb the partitioning or revert to pre-perturbed resource partitioning based on the performance metric comparison.

In at least one aspect of the subject disclosure, provided is at least one processor configured for dynamic resource partitioning. The processor(s) can comprise a first module for obtaining an existing resource partitioning for a set of wireless links and a second module for perturbing the existing resource partitioning for a subset of the wireless links and pushing the perturbation to one or more access points supporting the subset of links. Moreover, the processor(s) can comprise a third module for obtaining performance metrics from respective access points indicative of the perturbed resource partitioning and a fourth module for comparing the performance metrics with pre-perturbed network metrics. Further to the above, the apparatus can comprise a fifth module for selecting to retain the perturbed partitioning, further perturb the partitioning or revert to pre-perturbed resource partitioning based on the performance metric comparison.

According to at least one other aspect, the subject disclosure provides for a computer program product comprising a computer-readable medium. Additionally, the computer-readable medium can comprise a first set of codes for causing a computer to obtain an existing resource partitioning for a set of wireless links. The computer-readable medium can further comprise a second set of codes for causing the computer to perturb the existing resource partitioning for a subset of the wireless links and push the perturbation to one or more access points supporting the subset of links. Moreover, the computer-readable medium can comprise a third set of codes for causing the computer to obtain performance metrics from respective access points indicative of the perturbed resource partitioning. In at least one other aspect, the computer-readable medium can comprise a fourth set of codes for causing the computer to compare the performance metrics with pre-perturbed network metrics. Furthermore, the computer-readable medium can comprise a fifth set of codes for causing the computer to select to retain the perturbed partitioning, further perturb the partitioning or revert to pre-perturbed resource partitioning based on the performance metric comparison.

To the accomplishment of the foregoing and related ends, the one or more aspects comprise the features hereinafter fully described and particularly pointed out in the claims. The following description and the annexed drawings set forth in detail certain illustrative aspects of the one or more aspects. These aspects are indicative, however, of but a few of the various ways in which the principles of various aspects can be employed and the described aspects are intended to include all such aspects and their equivalents.

### BRIEF DESRIPTION OF THE DRAWINGS

**Fig. 1** illustrates a block diagram of an example dynamic resource partitioning apparatus according to aspects of the subject disclosure.

**Fig. 2** illustrates a block diagram of a sample system for optimizing wireless resource portioning according to further aspects.

**Fig. 3** depicts a block diagram of a sample resource partitioning apparatus according to one or more other disclosed aspects.

**Fig. 4** illustrates a block diagram of an example resource partitioning module according to yet other aspects disclosed herein.

**Fig. 5** depicts a block diagram of a sample system for providing dynamic resource partitioning in wireless communications.

**Fig. 6** illustrates a block diagram of an example system for collecting and aggregating data for dynamic resource partitioning according to particular aspects.

**Fig. 7** depicts a block diagram of a sample base station that provides dynamic resource partitioning in one or more aspects.

**Fig. 8** illustrates a block diagram of an example access terminal that facilitates dynamic resource provisioning according to yet other aspects.

**Fig. 9** illustrates a flowchart of an example methodology for resource optimization according to some aspects of the subject disclosure.

**Fig. 10** depicts a flowchart of a sample methodology for dynamic resource provisioning to optimize wireless communication according to other aspects.

**Fig. 11** depicts a flowchart of an example methodology for facilitating dynamic resource provisioning according to at least one disclosed aspect.

**Fig. 12** illustrates a flowchart of a sample methodology for measuring performance of a wireless network to facilitate dynamic resource provisioning.

**Fig. 13** illustrates a flowchart of a sample methodology for providing optimized resource partitioning according to one or more aspects.

**Figs. 14, 15** and **16** illustrate block diagrams of example systems for dynamic resource provisioning and network performance measurement.

**Fig. 17** depicts a block diagram of an example wireless transmit-receive chain facilitating wireless communication according to some aspects disclosed herein.

**Fig. 18** depicts a block diagram of a sample cellular communication environment according to various disclosed aspects.

**Fig. 19** illustrates a block diagram of an example wireless communication environment according to further aspects of the subject disclosure.

### DETAILED DESCRIPTION

Various aspects are now described with reference to the drawings, wherein like reference numerals are used to refer to like elements throughout. In the following description, for purposes of explanation, numerous specific details are set forth in order to provide a thorough understanding of one or more aspects. It can be evident, however, that such aspect(s) can be practiced without these specific details. In other instances, well-known structures and devices are shown in block diagram form in order to facilitate describing one or more aspects.

In addition, it should be apparent that the teaching herein can be embodied in a wide variety of forms and that any specific structure and/or function disclosed herein is merely representative. Based on the teachings herein one skilled in the art should appreciate that an aspect disclosed herein can be implemented independently of any other aspects and that two or more of these aspects can be combined in various ways. For example, an apparatus can be implemented and/or a method practiced using any number of the aspects set forth herein. In addition, an apparatus can be implemented and/or a method practiced using other structure and/or functionality in addition to or other than one or more of the aspects set forth herein. As an example, many of the methods, devices, systems and apparatuses described herein are described in the context of providing dynamic resource provisioning in a wireless communication environment. One skilled in the art should appreciate that similar techniques could apply to other communication environments.

Planned deployments of wireless base stations (BSs) in a wireless access network (AN) typically consider position, spacing and transmission/receive characteristics of transceiver devices. One goal of planned base station deployment is to reduce interference among transmitters. Thus, for instance, one deployment plan might space different base stations apart by a distance approximately equal to their respective maximum transmit ranges. In this type of deployment, signal interference between the base stations is minimized.

In unplanned or semi-planned BS deployments, wireless transmitters are often not positioned to reduce interference. Instead, it is not unusual with semi or unplanned deployments for two or more transmitting BSs (*e.g*., that transmit into substantially 360 degrees) to be in close proximity. Furthermore, such deployments often include base stations that transmit at significantly different power, covering a wide range of service areas (*e.g*., also referred to as a heterogeneous transmit power environment). As an example, a high power BS (*e.g*., macro cell at 20 watts) may be situated proximate a mid or low power transmitter (*e.g*., micro cell, pico cell, femto cell, *etc*., of varying transmission power, *e.g*., 8 watts, 3 watts, 1 watt, and so on). The higher power transmitter can be a significant source of interference for the mid and/or low power transmitters. Furthermore, lower power transmitters can be a significant source of interference for the high power BS, particularly for terminals close to such transmitters. Accordingly, signal interference in semi or un-planned environments and/or heterogeneous transmit power environments can often be a significant problem as compared with the conventional planned macro base station AN.

In addition to the foregoing, restricted access (RA) BSs can compound problems resulting from semi and un-planned BS deployment. For instance, an RA BS can selectively provide access to one or more terminal devices, denying network access to other such devices. Accordingly, devices are forced to search for other BSs if denied access, and often observe significant interference from the denying BS. As utilized herein, an RA BS can also be termed a private BS (*e.g*., a Femto cell BS or a home Node B [HNB]), or some similar terminology.

Further to the above, un-planned, heterogeneous and RA deployments can lead to poor geometric conditions for a wireless AN. Even without restricted association, a device that observes a very strong signal from a macro BS could be configured to prefer to connect to a pico BS, because the pico BS is "closer" to the terminal in terms of path-loss. Thus, the pico BS is capable of serving the terminal at a comparable data rate while causing less interference to the wireless AN. However, a terminal monitoring the pico BSs signal (*e.g*., a preamble comprising control and acquisition information) will observe significant interference from the macro BS, resulting in a low signal to noise ratio (SNR) at the terminal (*e.g*., possibly rendering the pico BS undetectable by the BS).

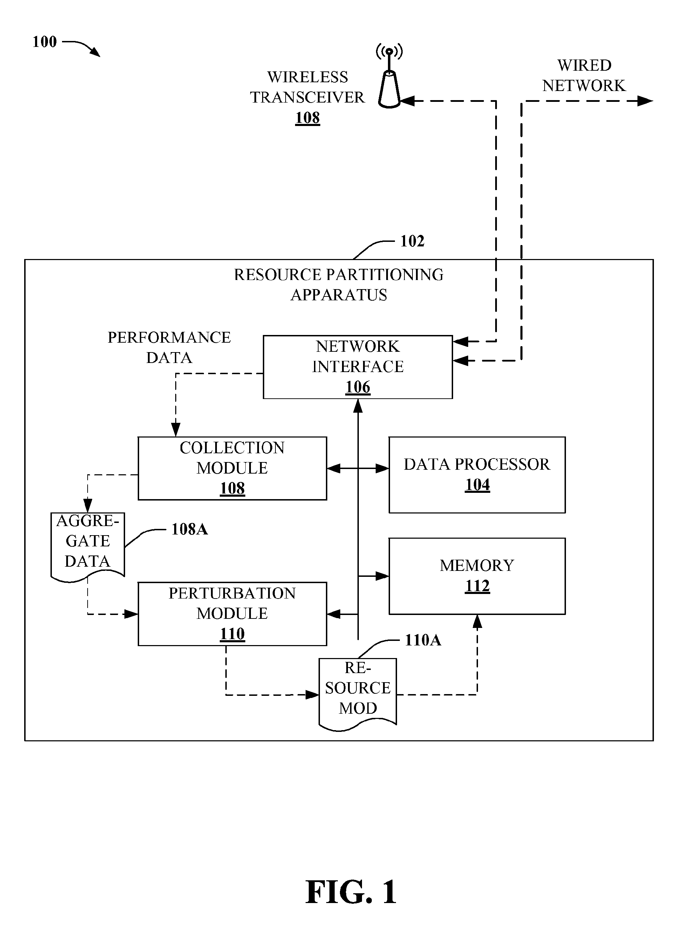

As described herein, several aspects of the subject disclosure are provided to address the foregoing problems or similar network communication and/or access problems. Turning now to the drawings, **Fig. 1** illustrates a block diagram of an example system 100 comprising a resource partitioning apparatus 102 according to aspects of the subject disclosure. Resource partitioning apparatus 102 can be employed to dynamically assign resources for a set of access points or terminals served by such access point(s), based on network performance metrics. Assignment can be provided to optimize performance for existing conditions, and monitor the network conditions over time to identify changes. Based on the changes, resource provisioning can be updated to re-optimize network performance. In some aspects, perturbations in existing resource provisioning can be introduced to fine tune the resource optimization, retaining perturbed provisioning when beneficial and reverting to a pre-perturbed state where detrimental.

As utilized herein, a wireless resource can refer to various portions of a wireless channel. Furthermore, the term resource is intended to be inclusive of any suitable wireless communication architecture. While some aspects of the subject disclosure may refer to specific examples of resources pertinent to one wireless communication architecture, the disclosure and appended claims are not to be interpreted as limited to that particular architecture. Rather, application of such examples to other wireless architectures (modified where necessary) is intended as part of the scope of the subject disclosure. For instance, if a particular example refers to orthogonal frequency division multiplex (OFDM) symbols as a wireless resource in an OFDM architecture, the example can be interpreted as being applicable to spread factor resources in a code division multiple access (CDMA) system as well. Generally speaking, the term resource is used in a broad sense, and includes an interlace, denoting a set of data frames spaced apart by an integer number of frames, a frequency carrier or sub-carrier, an OFDM symbol, a resource block, a time slot or subslot, a spread factor for a CDMA system or other architecture based on code spreading, an antenna or beamforming pattern in a multi-antenna system, or the like, or a suitable combination thereof.

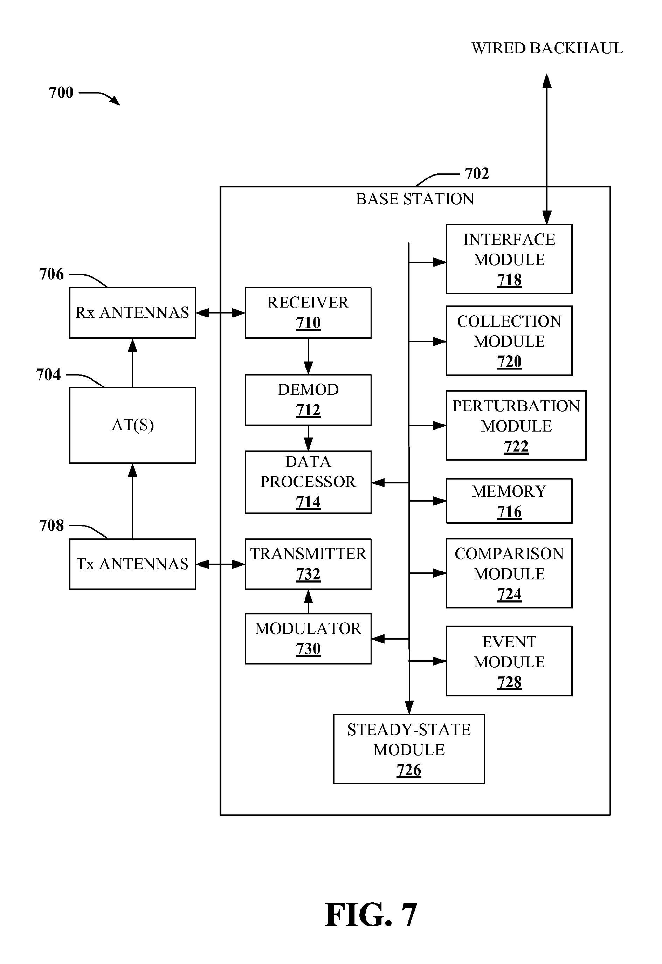

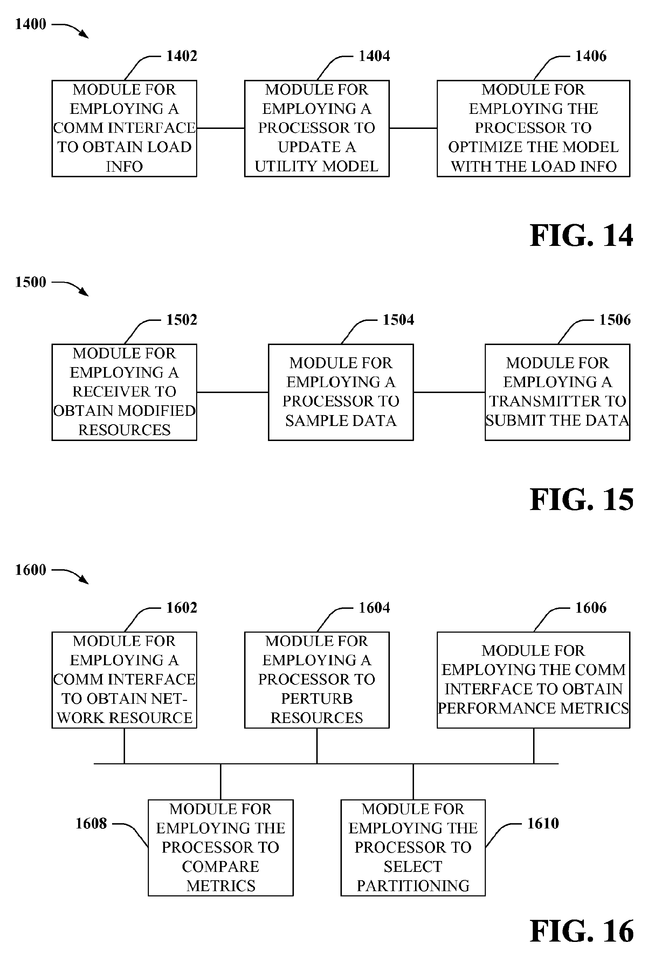

The resource partitioning apparatus 102, as well as other resource partitioning apparatuses described herein, can be implemented independently at a network base station (*e.g*., see **Fig. 7**, *infra*) for distributed optimization. Alternatively, resource partitioning apparatus 102 can be implemented at a common base station (*e.g*., a macro base station) to provide optimization for a set of access points within or near to a coverage area of the common base station. As another alternative, resource partitioning apparatus 102 can be implemented at a network controller (*e.g*., see **Fig. 15**, *infra*) for centralized optimization for a set of base stations (which can include, *e.g*., macro, micro, pico and femto base stations within a region governed by the network controller). In any of the foregoing cases, performance data can be shared among base stations or with the network controller to provide a rich and diverse basis for the dynamic resource provisioning.

Resource provisioning apparatus 102 can comprise a network interface module 106 for obtaining network performance metric data. The data can be obtained from one or more sources. In one aspect, the data can be derived from analysis of downlink (DL) signals transmitted by a base station (*e.g*., wireless transceiver 108) and received at an AT (not depicted). The DL signal analysis can include signal interference measurements, throughput measurements, latency measurements, signal to noise ratio (SNR) measurements, pathloss estimates, antenna gain estimates, or the like or suitable combinations thereof. This wireless network performance data can be submitted by the AT to wireless transceiver 108, which forwards the data to network interface module 106.

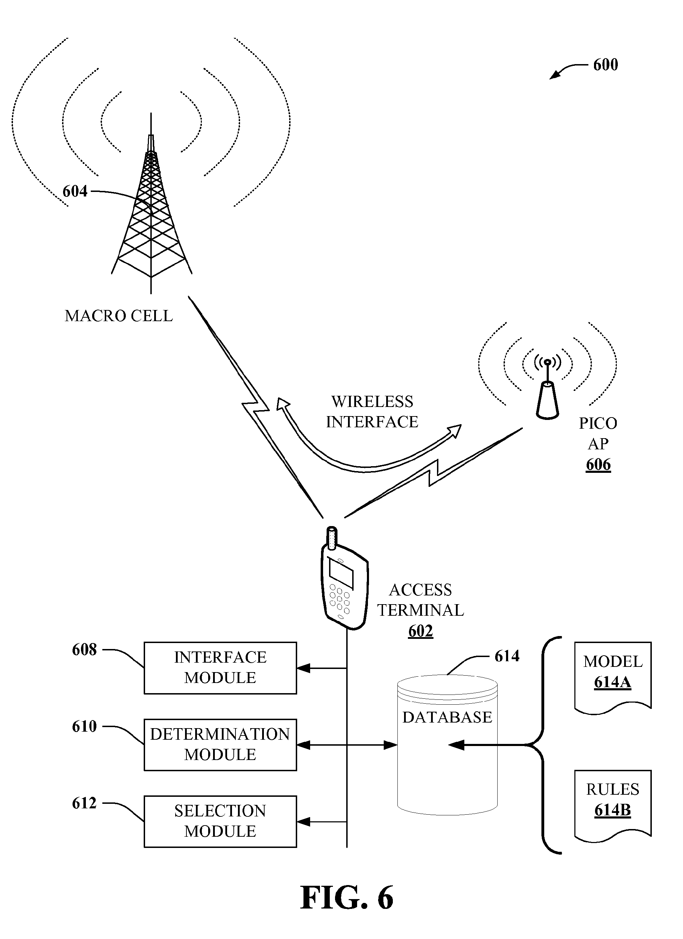

In other aspects of the subject disclosure, network performance metric data can be derived from analysis of uplink (UL) signals, using similar metrics as described above. Such analysis can be conducted at a base station (*e.g*., wireless transceiver 108), at resource partitioning apparatus 102, at a network component (*e.g*., radio network controller [RNC]), and so on. Analysis conducted at a base station (108) coupled to resource partitioning apparatus 102 can be forwarded directly to network interface module 106 *(e.g.,* over a system bus, or *via* a wired connection, such as an Ethernet connection, coaxial cable connection, or other suitable local wired interface). Data generated within a wireless core network, or at a radio access network (RAN) central controller can be forwarded to network interface module 106 over a wired network connection, such as a T-1 line, T-3 line, or other suitable wired network connection. Data generated by a neighboring base station (not depicted, but see **Fig. 6**, *infra*) can be forwarded to network interface module 106 *via* a backhaul connection, or routed over-the-air (OTA) to wireless transceiver 108 by an AT, wireless repeater, or other wireless device.

Network performance data obtained at resource partitioning apparatus 102 can be stored in memory 112. Additionally, memory 112 can be employed for storing a set of modules (108, 110) configured to dynamically partition wireless resources among a set of wireless access points. Moreover, resource partitioning apparatus 102 can comprise a data processor 104 for executing the modules. According to at least some aspects of the subject disclosure, the set of modules comprises a collection module 108 that aggregates network performance data provided by respective wireless access points of the set. Additionally, the set of modules can comprise a perturbation module 110 that receives an aggregated data set 108A from collection module 108 and modifies a resource assignment for at least one of the respective access points, where the modified assignment 110A is transmitted to the at least one access point for implementation.

The aggregated data 108A can include performance data for resource assignments of one or more network access points (108). The aggregated performance data (108A) can be parsed per resource (*e.g*., per frequency subband, per time slot or subslot, per symbol, per spread factor, and so on) or per set of resources. Additionally, the data (108A) can be parsed per access point, per type of access point (*e.g*., high power base station, low power base station, restricted access base station, *etc.)* or per set of access points, and stored in a suitable database (not depicted). The aggregated data 108A can retain performance information parsed as a function of these or like factors, so that changes in performance as a result of resource modifications (110A) can be analyzed at least as a function of such factors.

Perturbation module 110 obtains aggregated data 108A and can operate in one or more of several modes. As one example, perturbation module 110 can compare performance data characteristics (*e.g*., throughput, latency, pathloss, *etc.)* for an access point or set of access points with one or more threshold performance levels. These threshold performance levels can correlate quantitative performance data (*e.g*., throughput in a range of 100-500 kilobits per second [kbs]) to qualitative levels (*e.g*., minimum throughput of 100 kbs, standard throughput of 250 kbs, high throughput of 350 kbs or greater). Where perturbation module 110 detects performance data to be below a minimum acceptable threshold for an access point or AT (*e.g*., below standard throughput), a modification (110A) to existing resource assignment(s) can be generated and transmitted (*e.g*., *via* network interface module 106) to the access point or AT. The modification can be to resources that exhibit higher performance for an analyzed performance characteristic determined from the aggregated data 108A, or can be a relatively small adjustment determined from a suitable random walk formula, or similar perturbation formula.

As another example mode of operation, perturbation module 110 can generate modified resource assignments (110A) for a set of access points over time. In such a mode, the modification can be synchronized for the set of access points, where respective modifications are made for each access point of the set at a single time, or asynchronous, where modifications can be made for different access points of the set at different times. In synchronous mode, a modification time period for the set of access points can be established (or adjusted longer or shorter) based on aggregated performance (108A) compared with one or more performance thresholds, or can be based on identifying one or more access points falling below an acceptable performance level. For asynchronous mode, the modification time period can be determined separately for different access points, or for subsets of access points, based on an established perturbation time and optionally adjusted for existing performance. Once a modification time expires, a resource modification 110A is generated and pushed to one or more access points, as described herein.

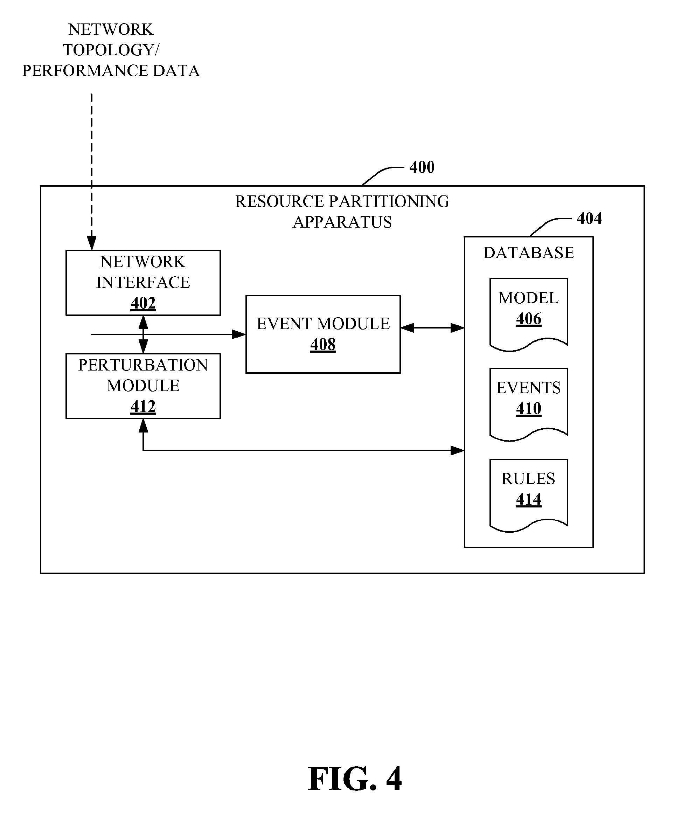

As yet another example mode of operation, perturbation module 110 can generate event-based modified resource assignments (110). Upon detecting a suitable event, for one or more access points, a modified resource assignment 110A is generated and pushed to the respective access point(s). Event-based resource modification is discussed in more detail at **Fig. 4**, *infra.* It should be appreciated that perturbation module 110 and resource partitioning apparatus 102 are not limited to the foregoing modes of operation. For instance, a suitable combination of the foregoing modes of operation can be implemented. As one example of such a combination, a synchronous time period can be established as a baseline for modification of resource assignments, and the baseline can be adjusted longer or shorter for optimal performance or suboptimal performance, respectively, as determined from aggregated data 108A relative one or more performance thresholds. Additionally, suitable defined events can trigger perturbation module 110 to generate modified resource assignments independent of the baseline time period or adjusted time period, at least for an access point(s) or AT(s) affected by the event. Other suitable modes of operation or combinations thereof known to one of skill in the art, or made known by way of the context provided herein, are included as part of the scope of the subject disclosure.

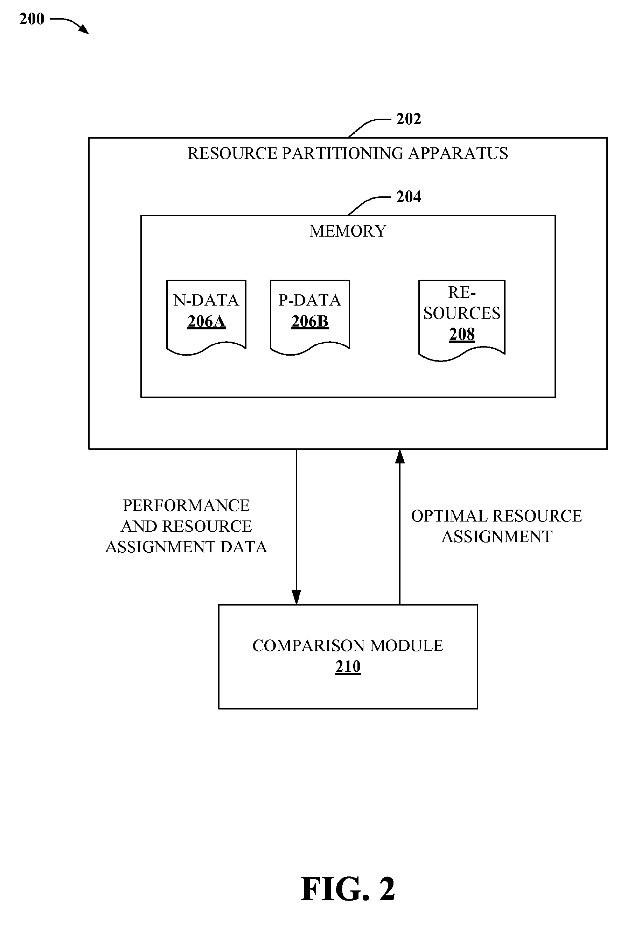

**Fig. 2** illustrates a block diagram of an example system 200 according to additional aspects of the subject disclosure. System 200 illustrates a particular mode of wireless resource optimization that can be implemented by a resource partitioning module 202. It should be appreciated that resource partitioning module 202 can be substantially similar to resource partitioning module 102 described above (or substantially similar to other resource partitioning modules described herein).

Resource partitioning module 202 comprises memory 204 which can be employed to store aggregated wireless network performance data (206A, 206B) pertaining to different resource assignment states 208. For instance, the network performance data (206A, 206B) can comprise data pertaining to a non-perturbed resource assignment state 206A (or non-perturbed/pre-perturbed data, or n-data) as well as data pertaining to a perturbed resource assignment state 206B (or perturbed data, or p-data). Although only two data files are depicted as stored in memory 204, it should be appreciated that multiple files can be stored in memory 204 pertaining to a sequence of perturbations. Alternatively, or in addition, the files 206A, 206B can be a single file (not depicted) in a database or spreadsheet formatting, that correlates sets of data per perturbed iteration, as well as per resource, per access point(s), per AT(s), and so on. Accordingly, by parsing performance data as a function of various network components and resource perturbation iterations, a detailed representation of network performance as a function of changes in resource assignment can be provided by stored data 206A, 206B.

System 200 can also include a comparison module 210 that evaluates respective resource assignment iterations 208 as a function of performance data 206A, 206B associated with such assignments. As a specific example, for instance, comparison module 210 can compare non-perturbed data 206A with perturbed data 206B to evaluate effects of a perturbation in resource assignment on network performance. Comparison module 210 outputs an optimal resource assignment based on comparison of the perturbed and the pre-perturbed network performance data. The optimal resource assignment can then be pushed by resource partitioning apparatus 220 to an associated access point(s) for implementation.

In one particular application, system 200 can be employed to provide iterative optimization of network resource assignments. Thus, performance data can be obtained from a network access point, including DL performance data measured by AT(s) served by the access point, as well as UL performance data measured by the access point. This performance data can be stored as non-perturbed data 206A. Based on the non-perturbed data 206A, resource partitioning apparatus 202 can generate a resource modification for the access point or AT(s), as described herein. Once the resource modification is implemented, additional performance data can be obtained based upon the updated resource assignment, and stored in memory 204 as perturbed data 206B. By comparing the non-perturbed data 206A with the perturbed data 206B, comparison module can determine a preferred set of resources for the access point or ATs. The preferred set of resources (perturbed or non-perturbed) can be selected and pushed by the resource partitioning apparatus 202 to the access point for implementation (which can comprise retaining the current resource assignment, if the perturbed resources are preferred, or reverting to the non-perturbed resource assignment).

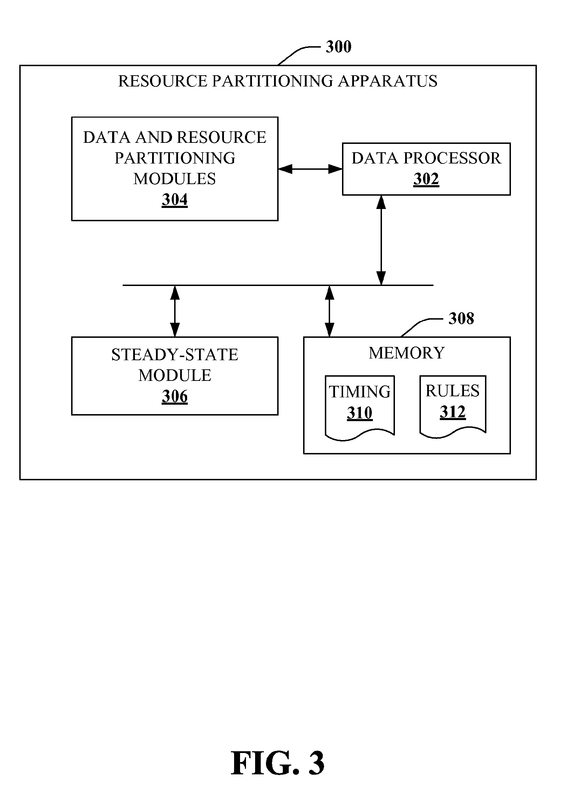

**Fig. 3** depicts a block diagram of an example resource partitioning apparatus 300 according to further aspects of the subject disclosure. Resource partitioning apparatus 300 can provide real-time optimization of resource assignments for a wireless network. The optimization can be applied to UL resources, DL resources, or both, based on availability of performance metric data for the respective types of resources. Additionally, resource partitioning apparatus 300 can provide distributed resource optimization for a single access point or coverage area (*e.g*., either alone or in conjunction with other such apparatuses 300 for distributed optimization), or central resource optimization for a set of access points or coverage areas. In the former case, apparatus 300 can be installed at a base station and optimize wireless resources pertaining to that base station, or at one point in a coverage area (*e.g*., a macro base station serving a macro coverage area) and optimize wireless resources of access points operating within or near to the coverage area. In such case, apparatus 300 can operate within a given range of resources assigned by a wireless network to the base station or coverage area, respectively, or can negotiate with other nearby apparatuses (*e.g*., installed at neighboring macro coverage areas, such as depicted at **Fig. 15****,** *infra*) to pool network-assigned resources and optimize across the pool of resources. For central resource optimization, resource partitioning apparatus 300 can be installed at a component of the wireless network (*e.g*., an RNC) and provide resource optimization for a set of access points and ATs across a full range (or part thereof) of wireless resources employed by the wireless network.

Resource partitioning apparatus 302 can comprise a data processor 302 that executes a set of data and resource partitioning modules 304. The set of modules 304 can be configured for determining optimal resource assignments based on wireless network performance metrics, as described herein. Additionally, the set of modules 304 can operate in an open-loop fashion, or a closed-loop fashion. For open-loop operation, resource partitioning apparatus 300 collects performance metric information (*e.g*., network topology, current loading, throughput, latency, *etc*.) for UL or DL channels. For distributed optimization, the collected data will typically be from base stations and terminals operating within a particular coverage area (*e.g*., macro coverage area), but can also include data collected from neighboring coverage areas as well (*e.g*., shared over a backhaul network, or obtained OTA from wireless terminals, repeaters or relays). For centralized optimization, the collected data is obtained from respective access points associated with a network controller coupled with resource partitioning apparatus 300.

In either the distributed or central case, a preferred resource partitioning is generated for a set of access points based on aggregation and parsing of collected data. If the preferred resource partitioning is different from existing partitioning, a modified resource assignment is generated from the preferred partitioning and pushed to respective access points for implementation. Alternatively, the preferred resource partitioning can be distributed among the access points, which can respectively identify resource changes needed to comply with the preferred partitioning, and implement those changes.

For closed-loop optimization, performance metric data is iteratively collected and fed back to the resource partitioning apparatus 300 to fine-tune resource optimization. One example of closed-loop optimization is a decision-directed approach. According to this example approach, resource partitioning apparatus 300 can employ a moving-average measurement of performance metric data to determine whether a particular partitioning is adequate (*e.g*., compared with one or more performance thresholds). For instance, the data and resource partitioning modules 304 can perturb existing partitioning (*e.g*., increasing or decreasing shared resources by one). This perturbation can be random or pseudo-random (*e.g*., implemented by an appropriate random/pseudo-random algorithm) or deterministic (*e.g*., based on a threshold change in performance metric data), and is communicated to access points managed by resource partitioning apparatus 300, and optionally to neighboring access points as well (*e.g*., in neighboring macro cells). Access points affected by the perturbation operate under this new resource partitioning for a specified period of time. The access point(s) collect performance metric data for the perturbed partitioning, both UL and DL, and forward the perturbed data to resource partitioning apparatus 300. Resource partitioning apparatus 300 can filter the data as a function of various performance statistics (*e.g*., AT throughput, latency, resource fairness, interference, SNR, access point buffer size, current or projected loading, and so on) and compare the filtered data to a set of performance thresholds. Based on the comparison, the data and resource partitioning modules 304 make a decision to retain the perturbed partitioning, or revert to the non-perturbed partitioning. The decision can then be pushed to respective access points to retain or change the perturbed resource partitioning.

As one specific decision-making example, data and resource partitioning modules 304 can employ median throughput as a dominant factor for decision-directed optimization. For this implementation, median throughput for a set of ATs served by an access point is obtained for an existing resource partitioning. Resource partitioning apparatus 300 then perturbs the existing resource partitioning according to a set of rules 312 stored in memory 308, and pushes the perturbation to the access point for implementation over a trial period. (The perturbation can also be pushed to other access points within a coverage area, as well as nearby coverage areas, for analysis by resource partitioning apparatuses 300 employed at those access points.) AT throughput data is measured over the trial period and aggregated into a median AT throughput metric, which is forwarded to resource partitioning apparatus 300. If the median throughput exceeds a default threshold (which can comprise, *e.g*., the previous median throughput measurement, or static or time-varying historic throughput, optionally plus or minus a constant throughput value), resource partitioning apparatus 300 instructs the access point to retain the perturbed partitioning. Otherwise, the access point is instructed to revert to the prior resource partitioning.

In addition to the foregoing, resource partitioning apparatus 300 can include a steady-state module 306 that periodically re-executes the set of modules 304 to maintain optimal resource assignment for dynamic network performance conditions. In one example, stead-state module 306 can accomplish optimization maintenance by simply re-executing the set of modules 304 periodically. A re-execution period can be defined by a timing algorithm 310 stored in memory 308. Optionally, the timing algorithm 310 can account for existing performance metric data, lengthening the period where existing performance metrics are good (*e.g*., above a preferred threshold) or shortening the period where existing performance metrics are poor (*e.g*., below a minimum threshold). In this optional case, steady-state module 306 can execute data gathering modules (*e.g*., see collection module 108 of **Fig. 1**, *supra*) more often than resource perturbation/optimization modules (*e.g*., see perturbation module 110 of **Fig. 1** and comparison module 210 of **Fig. 2****,** *supra*). For instance, the perturbation modules (108, 210) can be implemented for a subset of data gathering periods. The subset can be altered based on evaluation of the gathered data, as described above. This enables performance data to be monitored over time, and resource modification implemented when pertinent or necessary. Resource modification can be based on rules 312 that include protocols governing changes in resource partitioning based on various changes in the performance data. The rules 312 can incorporate aspects for modifying resources described herein, such as perturbing resource partitioning (incrementing or decrementing by one), and can also include selecting among predefined sets of wireless resources (*e.g*., grouped according to historical performance data) based on the performance data and desired performance specified by rules 312.

It should be appreciated that optimal resource partitioning can be different for UL and DL resource assignments. Accordingly, resource partitioning apparatus 300 can implement dynamic resource partitioning separately for UL resources and DL resources. This can apply for both closed-loop as well as open-loop optimization. As an alternative, UL and DL resource partitioning can be fixed, to reduce processing overhead for instance (this fixed partitioning can be implemented if processing resources [302] employed by resource partitioning apparatus 300 exceed a threshold maximum usage - particularly where data processor 302 is a shared processor also employed by a base station - see **Fig. 7****,** *infra*). In the latter alternative, performance metrics for resource partitioning can incorporate both DL and UL statistics. For instance, a weighted average of UL and DL performance metrics can be employed for fixed partitioning among UL and DL resources.

**Fig. 4** illustrates a block diagram of a sample resource partitioning apparatus 400 for implementing event-based resource modifications according to aspects of the subject disclosure. Resource partitioning apparatus 400 comprises a network interface module 402 that obtains network topology and performance data for a network. The topology and performance data can include status of one or more access points (*e.g*., active, inactive, powered down, *etc*.), ATs served by the respective access points, as well as performance metrics pertaining to wireless communication between the access points and ATs, as described herein. The performance data is aggregated and parsed per access point, per AT, and per resource or group of resources, and stored in database 404 as a network utility model 406. In at least one aspect of the subject disclosure, the performance data can be further parsed as a function of resource assignment, perturbation iteration, or the like, to build a progressive model of performance versus resource assignment. Additionally, changes in network topology/performance data can be updated to the model 406, yielding a steady-state model. Additionally, the data can be parsed in database 404 per update, to give a time or event-based progression of changes to network topology performance.

One particular example of network utility model 406 follows, below. It should be appreciated that other data models descriptive of a set of wireless networks can be employed for the network utility model, in addition to or in lieu of the example provided. For instance, other data representations of a set of wireless links and performance of such links known in the art, or made known to one of skill in the art by way of the context provided herein, are included in the scope of the subject disclosure.

In one example, network utility model 406 can be generated by resource partitioning apparatus 400 for a set of wireless links. As utilized herein, the term wireless link refers to a wireless exchange of data between remote wireless communication devices, governed by a set of wireless communication protocols, (*e.g*., third generation partnership project, third generation partnership project 2, global system for mobile communication, and so on). A wireless link commonly involves a base station and an AT; however, other wireless participants can be included within a wireless link, including one or more repeaters or relays, whether dedicated repeaters/relays or a base station(s) or AT(s) performing such function. The network utility model 406 is generated at least in part as a function of an existing resource partitioning for the set of wireless links. The resource partitioning includes wireless resources assigned by a network to respective wireless links. Resources can include particular frequency sub-band(s), time sub-slot(s), channel interlace(s), OFDM symbol(s), spread factor(s), or the like, or a combination thereof, that are assigned to the respective links. Thus, in this aspect, the network utility model 406 provides a map of wireless resource assignments for the wireless links.

In addition to the foregoing, the network utility model 406 can also be a function of performance metrics of the set of wireless links. For instance, wireless network access points (not depicted) supporting a subset of the wireless links can analyze wireless conditions (*e.g*., radio frequency [RF] conditions) pertinent to supported links and upload results of the analysis to resource partitioning apparatus 400. Wireless conditions can include measures of data rate, throughput, latency, signal to noise ratio (SNR), traffic loading, AT load, antenna gain, interference, scattering, and so on. Additionally, these wireless conditions can be measured directly from data exchange supported by the wireless links (*e.g*., a measured data rate or latency), or can be predicted from existing channel conditions (*e.g*., based on existing interference and scattering) as observed at a receiver. The measured/predicted wireless conditions are supplied to resource partitioning apparatus 400 as performance metrics, providing an existing or predicted analysis of network performance for the resource partitioning.

It should be appreciated that in addition to existing resource partitioning and performance metric data, network utility model 406 can also comprise historic partitioning or performance metric data. Historic data can be employed to identify how changes in resource partitioning affect performance metrics, for the set of links or subsets thereof. In addition, a correlation between resource partitioning and performance metrics can be derived from the historic and existing data. In at least one aspect, the partitioning, performance metrics and correlation(s) can be parsed per wireless link or subset of wireless links, per uplink(UL) or downlink (DL) channel or set of channels, or per AT or set of ATs, or the like, or a combination thereof.

Using the model 406, a correlation between partitioning and performance is derived for the set of wireless links. Resource inputs to the model 406 can be perturbed in order to predict changes in performance metrics. In some aspects of the subject disclosure, a network utility parameter can be derived from one or more performance metrics, for a subset of the wireless links (*e.g*., throughput for a particular access point, or data rate for a set of ATs engaged in high quality of service [QoS] traffic or high QoS application). By optimizing the network utility parameter (*e.g*., maximum data rate), a preferred resource partitioning can be selected.

As one example, a modified resource partitioning can be updated to the network utility model 406 (*e.g*., by perturbation module 412, see below). Based on the correlation between resource partitioning and performance metrics, model 406 can output an updated network utility parameter value based on the modified resource partitioning. In at least one aspect of the subject disclosure, resource partitioning apparatus 400 can select a resource partitioning for a wireless network access point or set of access points that optimizes or maximizes a network utility parameter of the model 406. Thus, if the network utility parameter improves by at least a threshold amount, an inference is drawn that the perturbation is optimal. If the utility parameter changes by less than the threshold amount, an inference can be drawn that the perturbation is insignificant. If the utility parameter worsens by more than the threshold amount, an inference can be drawn that the perturbation is detrimental. In some aspects, more than one threshold is utilized to determine successful, insignificant or detrimental changes.

According to at least one particular aspect of the subject disclosure, a selected resource partitioning can be distributed to network access points supporting an affected wireless links for implementation. RF conditions for the network access point(s) can be updated consistent with the selection resource partitioning. In response, performance data can be received for the updated RF conditions. This performance data can then be employed as input to model 406 (*e.g*., performance metric input) to re-optimize the network utility parameter.

Resource partitioning apparatus 400 further comprises an event module 408 that, in one aspect of the subject disclosure, initiates execution of a perturbation module 412 based on one of a change in network topology or a change in resource partitioning of a neighboring cell (relative to location of the apparatus). Qualifying changes in network topology or resource partitioning are included in a set of events 410 stored in memory 404. Examples of qualifying changes in network topology include a change in number of active access points (*e.g*., access points available to serve ATs), a change in number of ATs served by an access point, an AT entering or leaving a particular coverage area, AT handoff to or from an access point, a change in AT loading or amount of traffic loading at the access point, or the like, or a combination thereof. The event module 408 monitors the network utility model 406 to identify suitable events and triggers the perturbation module 412 when such an event is identified. Perturbation module 412 accesses a set of rules 414 defining changes in resource assignment as a function of trigger event, or as a function of a state of the network utility model 406. Modified resource assignments are generated by perturbation module 412 according to the rules 414 and pushed out *via* network interface module 402 to pertinent network access points. Subsequent network topology/performance data is updated to model 406, and can be parsed to reflect changes made by the modified resource assignments.

As described, resource partitioning apparatus 400 can provide dynamic resource optimization based on a real-time performance model (406) of a wireless communication network. This can result in a significant increase in network efficiency. Furthermore, the dynamic resource optimization can automatically adapt resource partitioning to changes in topology, accommodating roaming ATs, addition of new access points within a coverage area, failure of one or more access points, and so on. Accordingly, resource partitioning apparatus 400 provides a significant improvement in wireless network operation and maintenance.

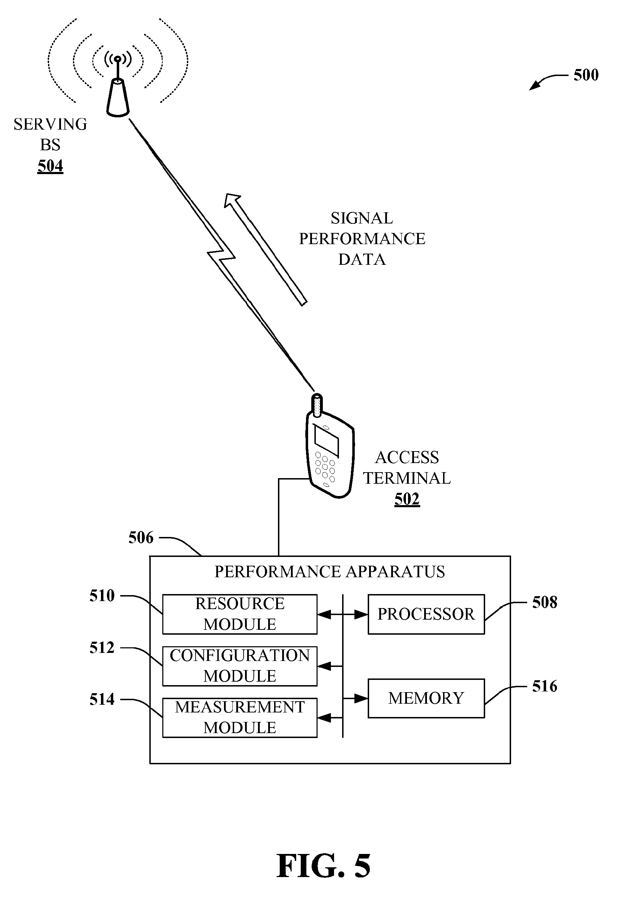

**Fig. 5** illustrates a block diagram of an example system 500 for measuring wireless channel performance data according to aspects of the subject disclosure. System 500 comprises a serving base station 504 wirelessly coupled with an AT 502. Serving base station 502 can analyze UL signals transmitted by AT 502 according to performance statistics. In addition, data transmissions to and from the AT 502 can be measured to arrive at throughput, latency, data rate, or like measurements for traffic communications involving the AT 502. Alternatively, or in addition, AT 502 can comprise a performance apparatus 506 for measuring DL signal statistics transmitted by serving base station 504. According to some aspects of the subject disclosure, performance apparatus 506 can further perform the above measurements for traffic communication as well.

Performance apparatus 506 can comprise a memory 516 that stores a set of modules (510, 512, 514) configured to facilitate dynamic resource assignment for wireless communication, and a data processor 508 for executing the set of modules (510, 512, 514). In some aspects of the subject disclosure, the set of modules (510, 512, 514) are configured to identify modified resource assignments transmitted by serving base station 504, and tune access terminal 502 to those resources. Additionally, the set of modules (510, 512, 514) can be configured to sample performance data pertaining to a modified resource assignment, and transmit the sampled data to the serving BS 504. In at least one aspect of the subject disclosure, performance apparatus 506 can comprise rules (not depicted) stored in memory 516 for optimizing UL resources employed by AT 502. In other aspects, optimization is performed at serving base station 504 or an associated network component, and conveyed to AT 502.

Set of modules 510, 512, 514 can comprise a resource module 510 that analyzes a received wireless message to identify changes in wireless resource assignments sent by a serving wireless network (*e.g*., base station 504) for AT 502. The set of modules also comprises a configuration module 512 that tunes a transceiver of AT 502 according to changes identified by the resource module 510. Furthermore, the set of modules can comprise a measurement module that samples performance data for AT 502 over the changed wireless resources and facilitates performance evaluation of the changed wireless resources. Performance data can be parsed per resource, or set of resources, by data processor 508. Alternatively, the performance data can be sent unparsed (*e.g*., as a text file) to preserve processing resources at AT 502. In some cases, a determination whether to parse or not parse the data can be based on existing load of processor 508, on battery strength of AT 502, or like considerations.

Operation of performance apparatus 506 can be implemented in at least two alternative arrangements. In one arrangement, performance data is submitted to serving base station 504, which conducts the performance evaluation as described herein. A response from serving base station 504 containing updated resource assignments can be received at AT 502 and identified by resource module 510. The updated resource assignments are then tuned by configuration module 512, as discussed above, to implement those assignments. In this alternative arrangement, optimization and dynamic resource partitioning is primarily conducted at a network-based partitioning apparatus, based on performance metric data at least in part provided by performance apparatus 506.

In an alternative aspect, performance data can optionally be stored in memory 516. In such aspect, memory 516 can optionally comprise a database or data parsing module - not depicted - that can parse the performance data per resource, per set of resources, per performance characteristic, per optimization iteration, and so on, as described herein. The parsed data can be utilized by performance apparatus 506 for AT-based resource optimization (*e.g*., see **Fig. 6**, *infra*, for more details of AT-based resource optimization). Thus, in at least one aspect of the subject disclosure, dynamic resource partitioning and optimization can be conducted at an AT 502, either in conjunction with or as an alternative to base station or network-implemented resource partitioning as described elsewhere herein.

For the latter arrangement involving AT-based resource optimization, AT 502 can request network optimization rules from a network associated with serving base station 504, upon registering with the network. If such rules are received, performance apparatus 506 can execute modules for resource optimization based on such rules. If UL performance metric data is available from serving base station 504, the resource optimization can include UL signal statistics. If UL performance metrics are unavailable, performance apparatus 506 can employ the network rules based on DL signal performance metrics generated by measurement module 514, if the network rules comprise resource optimization protocols based on DL-only metrics. Otherwise, performance apparatus can default to a network-based optimization arrangement instead.

**Fig. 6** illustrates a block diagram of an example system 600 that facilitates dynamic resource provisioning according to particular aspects of the subject disclosure. System 600 comprises a macro base station 604 serving a macro coverage area, a pico base station 606 serving a pico coverage area that is at least partially contained with the macro coverage area, and an AT 602. One or more of the base stations 604, 606 implements dynamic resource optimization as described herein (*e.g*., *via* a resource partitioning apparatus). In alternative aspects, it should be appreciated that base station 606 could be other than a pico base station. For instance, base station 606 could be a micro base station, a relay base station, a femto base station, or another macro base station. In at least one aspect, base station 606 could represent a set of base stations, such as a group of pico and femto base stations, and one or more relay base stations.

To facilitate the resource optimization, AT 602 can measure DL signals transmitted by one or more of the base stations 604, 606, and submit the DL measurements for analysis. In addition, AT 602 can relay messages between the respective base stations *via* an interface module 608. In the latter aspect, AT 602 can act as a relay for DL data exchange between base stations 604, 606.

As one particular example, assume AT 602 is served by pico access point 606, within a larger macro cell of neighboring macro base station 604. Interface module 608 can forward wireless messages from the serving base station (606) to the neighboring base station (604), or *vice versa.* In such a manner, AT 602 can facilitate sharing network topology or wireless performance data among the base stations (604, 606) for dynamic resource assignment. Accordingly, a resource assignment implemented by one base station (*e.g*., 604) can be based at least in part on resources employed by the neighboring base station (*e.g*., 606). In another aspect, modification or perturbation of resource assignment, as described herein, can be triggered based on activity pertaining to a neighboring base station (604, 606), including change in topology affecting the neighboring base station, change in wireless conditions at the neighboring base station, change in resource assignments at the neighboring base station, and so on.

In addition to the foregoing, AT 602 can facilitate centralized resource assignment and optimization. In this case, macro base station 604 assigns an initial set of resources to pico access point 606, and forwards this assignment OTA *via* AT 602. AT 602 and pico access point 606 can perform performance metric calculations as described herein (for DL and UL signals, respectively), and AT 602 then forwards results of these calculations to macro base station 604. Utilizing these calculations, macro base station 604 generates a modified/optimized resource assignment, maintains steady-state optimal resource partitioning, and so on, for pico access point 606. Subsequent resource assignments generated by macro base station 604 are then forwarded to pico access point 606 OTA *via* AT 602. This configuration can be implemented for any suitable number of pico access points 606, or other access points (e.g., micro access point, femto access point, or a neighboring macro base station).

Further to the above, it should be appreciated that the modified/optimized resource assignment can be based at least in part on a type or classification of access point 606. For instance, generating the modified/optimized resource assignment can be based on a set of efficiency protocols configured to mitigate interference in a network. The protocols can be generic, or particular to a network deployment (*e.g*., designed for a particular macro environment, configured for heterogeneous access point deployment, *etc*.). In one example, the protocols can be configured by reserving distinct sets of orthogonal wireless resources for distinct classifications of access points. In another example, the protocols can be configured more generally to provide resource allocation rules for different classifications of network access points. As a more particular example, selecting resource partitioning can comprise classifying network access points as macro, pico, femto access points, as relay base stations, or the like. Upon classification, the selecting the resource partitioning can further comprise referencing the network efficiency protocols to determine whether particular resources should be assigned based on the access point class.

According to at least one aspect of the subject disclosure, AT 602 can be further configured to provide AT-based resource optimization for system 600. Resource optimization can be for DL resources, or for both UL and DL resources, depending on availability of performance metric data. For DL, AT 602 can analyze DL signals transmitted by service pico access point 606 and obtain performance data measurements there from (*e.g*., see measurement module 514 at **Fig. 5****,** *supra*). Results of such measurements are employed to generate a parsable network utility model 614A (which can be, *e.g*., substantially similar to network utility model 406 of **Fig. 4****,** *supra*) stored within a database 614. Where UL performance metric data can be obtained (*e.g*., from serving pico access point 606 or from macro base station 604) the network utility model 614A can be updated with UL performance metric data as well as DL data.

One or more other modules (610, 612) can analyze the utility model 614A and generate a modified set of resources for communication between AT 602 and serving access point 606. For instance, a determination module 610 can execute a performance evaluation of the network utility model 614A at least for DL signaling received at the AT 602. If available, determination model 610 can alternatively analyze the model 614A for both DL and UL data, for a richer analysis. A selection module 612 can be employed to generate modified or perturbed resources for resource optimization (*e.g*., in substantially similar fashion as performed by resource partitioning apparatuses 102, 202, 300, or 400, *supra*). Thus, in at least one aspect, the selection module 612 generates a modified set of DL resources for the apparatus based on the performance evaluation, and submits a request to serving access point 606 to employ the DL resources. In other aspects, the selection module 612 can generate a modified resource set comprising UL and DL resources, and submit the modified set for network approval. In still other aspects, selection module 612 can employ a set of network-provided rules 614B for selecting the modified/optimized resources. In the latter aspects, network-approval need not be obtained, and AT 602 acts in a similar manner as a resource partitioning module coupled to a neighboring base station (606), and merely submits a record of the selected resources to the network for reference.

As described herein, AT 602 can implement various types of resource optimization. For open-loop optimization, modified resources can be generated periodically or based on one or more identified events utilizing existing performance data. For closed-loop optimization, existing performance metric data is utilized to generate and update network utility model 614A, which in turn is utilized to generate modified or optimized resources.

**Fig. 7** illustrates a block diagram of an example system 700 comprising a wireless base station 702 configured for aspects of the subject disclosure. As one example, system 700 can comprise a base station 702 that is configured for dynamic resource partitioning for ATs (704) served by the base station 702. In another example, base station 702 is configured to provide centralized resource partitioning for a set of base stations or access points (not depicted). In at least one example, base station 702 is configured to analyze UL signals transmitted by one or more ATs 704 for performance metric data. The base station 702 can optionally instruct the AT(s) 704 to analyze DL signals transmitted by base station 702 as well. In such example, the base station 702 can forward results of the UL or DL signal analysis, or both, to a centralized resource partitioning apparatus (*e.g*., coupled with a different base station, or coupled with a network component). The results can be forwarded over a wired connection with a network component, over a backhaul network with another base station (702), or OTA *via* AT(s) 704.

Base station 702 (*e.g*., access point, ...) can comprise a receiver 710 that obtains wireless signals from one or more of ATs 704 through one or more receive antennas 706, and a transmitter 732 that sends coded/modulated wireless signals provided by modulator 730 to the AT(s) 704 through a transmit antenna(s) 708. Receiver 710 can obtain information from receive antennas 706 and can further comprise a signal recipient (not shown) that receives uplink data transmitted by AT(s) 704. Additionally, receiver 710 is operatively associated with a demodulator 712 that demodulates received information. Demodulated symbols are analyzed by a data processor 714. Data processor 714 is coupled to a memory 716 that stores information related to functions provided or implemented by base station 702. In one instance, stored information can comprise timing data generated as a result of the redundant analysis employed by base station 702. The data can be employed to identify and correct signal timing errors. In addition to the foregoing, memory 716 can comprise rules or protocols for sending secondary timing analysis to one or more ATs 704. Such analysis can be conducted at ATs 704, and results transmitted back to base station 702 for integration with primary analysis timing analysis conducted at base station 702, as described herein.

Further to the above, base station 720 can comprise an interface module 718 configured to communicate according to various communication protocols. Such protocols can comprise wired network protocols, including Ethernet, digital subscriber line (DSL), coaxial cable, and so on. In at least one aspect, the interface module 718 can be configured to communicate over a wired backhaul coupling base station 702 with one or more other base stations (not depicted). In addition, interface module 718 can be configured to employ the wireless transmit and receive chain (*e.g*., receive antenna(s) 706, receiver 710, demodulator 712, modulator 730, transmitter 732 and transmit antenna(s) 708) of base station 702, for wireless communication protocols. In such a manner, interface module can communication OTA with AT(s) 704, or with other suitable wireless devices. In at least one aspect, interface module 718 can communicate over a wireless backhaul coupling base station 702 with the one or more other base stations. Interface module 718 can further send and receive (*e.g*., decode) messages from other base stations, wireless devices, or network components, pertaining to resource assignments. Such messages can include modified/changed resource assignments for base station 702 or AT(s) 704. Alternatively, or in addition, the messages can include performance metric data utilized to establish the modified/changed resource assignments, as described herein.

According to further aspects of the subject disclosure, base station 702 can comprise a collection module that aggregates network performance metric data obtained by interface module 718. The aggregated performance metric data can be saved in memory 716 (*e.g*., which can include or be coupled to a database), and can also be parsed by collection module 720 as a function of resource, set of resources, DL or UL signal, transmitter or receiver, temporal change, resource optimization iteration, or other factors described herein, or suitable for optimizing resource partitioning. A perturbation module 722 can employ the aggregated data to generate a modification to resource assignment of base station 702, or AT(s) 704. The modification can thus be implemented by data processor 714 (for DL resources) or pushed to AT(s) 704 (for UL resources). A comparison module 724 can evaluate performance metric data of the modified resource assignment with respect to pre-modified resource assignments (*e.g*., a most recent version, or a set of prior versions), to identify better performing resources.

In particular aspects of the subject disclosure, base station 702 can comprise a steady-state module 726 which can be employed to periodically re-execute a set of modules (*e.g*., modules 720, 722, 724 employed for resource optimization) to maintain optimal resource assignment for dynamic network performance conditions. A period employed by the steady-state module 726 can be unique for a particular base station (702), synchronous for a set of wireless access points (*e.g*., operating within a macro coverage area), or asynchronous for the set of wireless access points (*e.g*., such that at least one access point re-executes dynamic partitioning at a different period from another access point of the set). In the latter case, the period can be generated by a random or pseudo-random function and is common for the set of wireless access points, or generated separately at respective access points of the set. In at least one aspect of the subject disclosure, the pseudo-random function is employed for determining the period and is weighted to delay or shorten a randomly generated period based on current network performance.

According to alternative aspects of the subject disclosure, base station 702 can comprise an event module 728. Event module 728 can be configured to initiate execution of perturbation module 722 based on occurrence of an event. In some aspects of the subject disclosure, the event can include one or more of a change in network topology (*e.g*., detected by interface module 718, or specified in a message obtained at interface module 718) or a change in resource partitioning of a neighboring cell, relative base station 702. Other events can include a resource change request by AT(s) 704 or by the neighboring cell, degradation of wireless network performance (*e.g*., determined from aggregated data provided by collection module 720), or the like, or a suitable combination thereof.

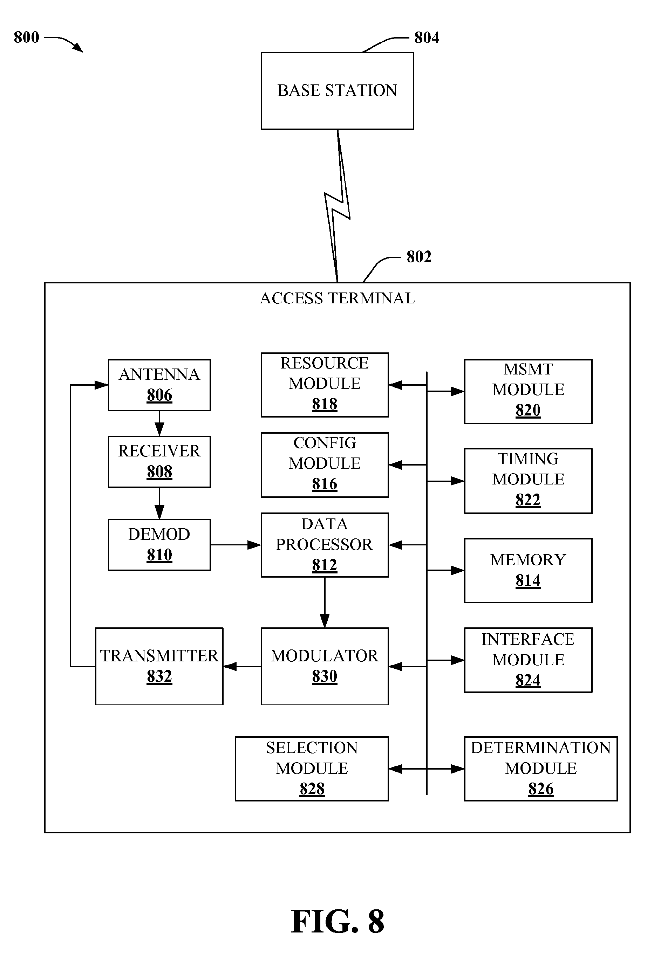

**Fig. 8** depicts a block diagram of an example system 800 comprising an AT 802 configured for wireless communication according to aspects of the subject disclosure. AT 802 can be configured to wirelessly communicate with one or more base stations 804 (*e.g*., access point) of a wireless network. Based on such configuration, AT 802 can receive wireless signals from a base station (804) on a forward link channel and respond with wireless signals on a reverse link channel. In addition, AT 802 can comprise instructions stored in memory 814 for analyzing received wireless signals, specifically, for calculating performance metric data pertaining to received wireless signals, or the like, as described herein. In at least one aspect, AT 802 can facilitate or implement resource optimization based on the performance metric data, or like data obtained from base station 804.

AT 802 includes at least one antenna 806 (*e.g*., a wireless transmission/reception interface or group of such interfaces comprising an input/output interface) that receives a signal and receiver(s) 808, which perform typical actions (*e.g*., filters, amplifies, down-converts, *etc.*) on the received signal. In general, antenna 806 and a modulator 830 and transmitter 832 can be configured to send wireless data to base station(s) 804.

Antenna 806 and receiver(s) 808 can also be coupled with a demodulator 810 that can demodulate received symbols and provide such signals to a data processor(s) 812 for evaluation. It should be appreciated that data processor(s) 812 can control and/or reference one or more components (806, 808, 810, 814, 816, 818, 820, 822, 824, 826, 828, 830, 832) of AT 802. Further, data processor(s) 812 can execute one or more modules, applications, engines, or the like (816, 818, 820, 822, 824, 826, 828) that comprise information or controls pertinent to executing functions of the AT 802. For instance, such functions can include receiving and decoding wireless signals, identifying resource assignments from such signals, analyzing received signals to network performance statistics, submitting performance statistic information to base station 804, providing an OTA interface for data sharing among base stations (804), implementing resource optimization based on such statistics, or the like.

Additionally, memory 814 of AT 802 is operatively coupled to data processor(s) 812. Memory 814 can store data to be transmitted, received, and the like, and instructions suitable to conduct wireless communication with a remote device (804). Specifically, the instructions can be utilized to implement the various functions described above, or elsewhere herein. Further, memory 814 can store the modules, applications, engines, *etc*. (816, 818, 820, 822, 824, 826, 828) executed by data processor(s) 812, above.

According to particular aspects of the subject disclosure, AT 802 can comprise a resource module 816 that analyzes a received wireless message to identify changes in wireless resource assignments sent by a serving wireless network (804). In at least one disclosed aspect, resource module 816 obtains a set of UL resources dynamically determined (*e.g*., by base station 804 or by selection module 828, *infra)* from evaluation of UL performance metrics of the apparatus and one or more wireless ATs served by the wireless network. Additionally, a configuration module 818 can tune a transceiver (806, 808, 832) of AT 802 according to changes identified by resource module 816. A measurement module 820 can proceed to sample performance data for AT 802 over the changed wireless resources and facilitate performance evaluation of the changed wireless resources. The performance data can comprise latency, pathloss, buffer size, antenna gain, interference or throughput metrics for DL transmissions received by AT 802. Alternatively, base station 804 can receive and analyze UL transmissions sent by AT 802 at least in part on a latency, pathloss, throughput, interference or antenna gain metric of such transmissions. Results of the evaluation (whether UL or DL) can be stored in memory 814, submitted to base station 804, or both. Additionally, a response to the evaluation transmitted by base station 804 can preserve the changes, reverse the changes or further change the resource assignment based on the performance evaluation. The response to the evaluation can also be based at least in part on UL or DL performance metrics, or based on performance metric data for both UL and DL activity of AT 802.

Further to the above, AT 802 can comprise a timing module 822 that causes the resource module to periodically analyze transmissions of the wireless network for changes in wireless resource assignments. The period can be provided by the wireless network, and is either fixed or modified based on the performance evaluation. In the latter case, the period for re-analyzing transmission can be lengthened for positive performance evaluation, or shortened for substandard performance evaluation, as one example.

According to a further aspect, AT 802 can comprise an interface module 824 that forwards wireless messages among base stations. For instance, the interface module 824 can be employed to forward wireless messages from a serving base station (804) to a neighboring base station (not depicted), or *vice versa.* This message forwarding arrangement can facilitate sharing network topology or wireless performance data among the base stations for dynamic resource assignment. Specifically, selected or perturbed resources can be based at least in part on performance metric data associated with a neighboring base station.

According to an additional aspect, AT 802 can comprise a determination module 826 that executes a performance evaluation at least for DL signaling received at AT 802. Results of the performance evaluation can be saved in memory 814 and parsed per resource, per set of resources, per AT (802), per resource assignment, per optimization iteration, and so on. Additionally, AT 802 can comprise a selection module 828 that generates a modified set of DL resources for AT 802 (and optionally UL resources as well) based on the performance evaluation. The modified set of DL resources is submitted in a request to employ the DL resources to a serving base station 802. If the request is granted, AT 802 can re-tune to the requested UL or DL resources.

The aforementioned systems have been described with respect to interaction between several components, modules and/or communication interfaces. It should be appreciated that such systems and components/modules/interfaces can include those components/modules or sub-modules specified therein, some of the specified components/modules or sub-modules, and/or additional modules. For example, a system could include AT 802, base station 702, and resource partitioning apparatus 102, or a different combination of these or other modules. Sub-modules could also be implemented as modules communicatively coupled to other modules rather than included within parent modules. Additionally, it should be noted that one or more modules could be combined into a single module providing aggregate functionality. For instance, determination module 826 can include selection module 828, or *vice* versa, to facilitate performance evaluation of DL resources and generating a modified set of resources based at least in part on the evaluation by way of a single component. The components can also interact with one or more other components not specifically described herein but known by those of skill in the art.

Furthermore, as will be appreciated, various portions of the disclosed systems above and methods below may include or consist of artificial intelligence or knowledge or rule based components, sub-components, processes, means, methodologies, or mechanisms (*e.g*., support vector machines, neural networks, expert systems, Bayesian belief networks, fuzzy logic, data fusion engines, classifiers...). Such components, *inter alia,* and in addition to that already described herein, can automate certain mechanisms or processes performed thereby to make portions of the systems and methods more adaptive as well as efficient and intelligent.

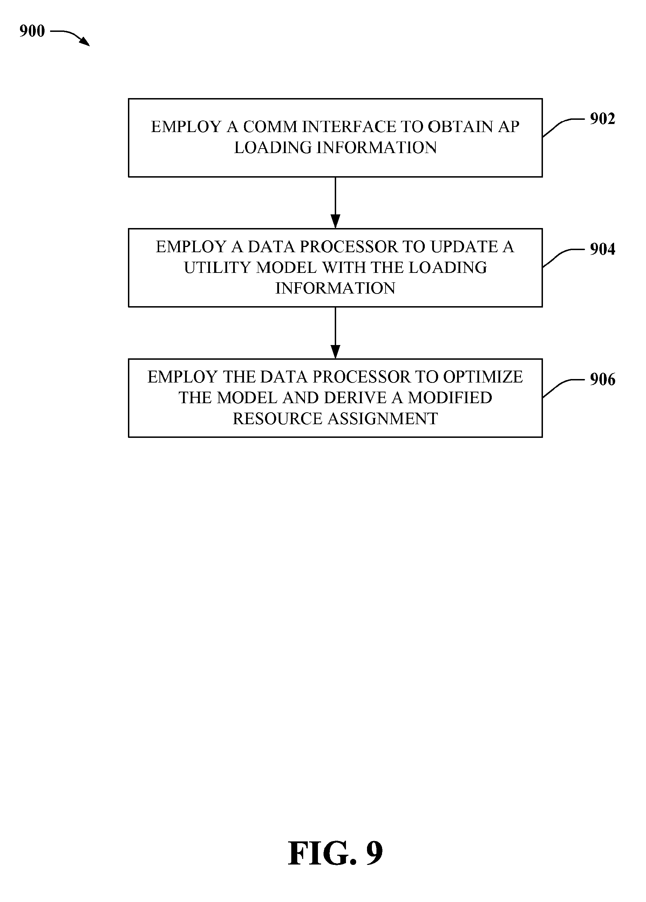

In view of the exemplary systems described *supra*, methodologies that may be implemented in accordance with the disclosed subject matter will be better appreciated with reference to the flow charts of FIGs. 9-12. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter. Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, device in conjunction with a carrier, or storage medium.

**Fig. 9** illustrates a flowchart of an example methodology 900 for wireless resource optimization according to particular aspects of the subject disclosure. At 902, method 900 can employ a communication interface to obtain loading information for a wireless network access point. The loading information can relate to a number of access terminals served by the wireless network access point at a given time, as well as wireless performance metric data pertaining to one or more of the access terminals. At 904, method 900 can employ a data processor to update a network utility model, based at least on access point loading and resource requirements, with the loading information. According to particular aspects of the subject disclosure, the network utility model can comprise data that is segmented as a function of existing access terminals served by the access point, resource requirements of respective terminals, resource assignments of the respective terminals, as well as performance metrics associated with the assignments. In at least one aspect, the network utility model can further be based on a historic compilation of such data, which correlates respective performance metrics with respective resource assignment iterations. At 906, method 900 can comprise employing the data processor to optimize a network utility parameter (*e.g*., throughput, latency, *etc*.) of the updated model by varying resource requirement variables, and deriving a modified resource assignment for the network access point correlated with the optimized parameter. Optimization can be re-initiated periodically, or in response to detection of one or more events, as described herein, to achieve a steady-state optimization of resources for a given network topology or access point loading.

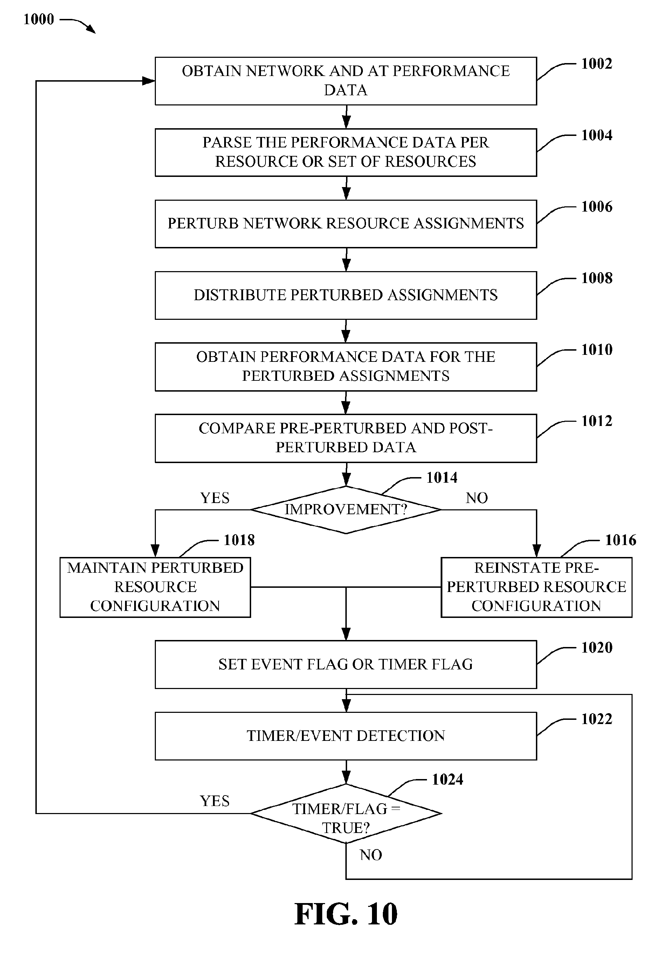

**Fig. 10** illustrates a flowchart of a sample methodology 1000 for providing steady-state resource optimization according to particular aspects of the subject disclosure. At 1002, method 1000 can comprise obtaining network and performance data for one or more wireless network access points and associated access terminals, as described herein. Additionally, at 1004, method 1000 can comprise parsing the performance data per resource or per set of resources. At 1006, method 1000 can comprise perturbing network resource assignments. At 1008, method 1000 can distribute perturbed assignments among the access point(s) and access terminal(s). At 1010, method 1000 can obtain performance data for the perturbed resource assignments. At 1012, method 1000 can compare pre-perturbed and post-perturbed performance data. Comparison can be made by employing a network utility model. For instance, the method can update inputs to the network utility model with the performance data for the perturbed resource assignments, and compare changes to the network utility model with and without the updated inputs.

At 1014, a determination is made as to whether the perturbation results in a performance improvement, based on the comparison. In one aspect of the subject disclosure, the determination can be based on calculating a probability of improving a network utility parameter based on comparison of perturbed and pre-perturbed performance metrics. The method can further involve employing the probability relative a set of probability thresholds for the determination. If an improvement is achieved, method 1000 can proceed to 1018; otherwise method 1000 proceeds to 1016.

At 1016, method 1000 can re-instate or revert to a pre-perturbed resource configuration for the access point(s) or access terminal(s), where no improvement is detected at reference number 1014. Alternatively, at 1018, method 1000 can maintain the perturbed resource configuration if an improvement is detected. In one particular example, method 1000 can employ a probability model to select between options of reverting, retaining or further perturbing the perturbed resource partitioning. The probabilistic model can assign highest probability to an option having highest inferred utility (*e.g*., with probability of all options summing to unity). Additionally, the probabilistic model can be configured so that a likelihood that one option is selected is proportional to that option's assigned probability. In one aspect of the example, the method 1000 can further comprise inferring that network utility is optimized by further perturbing resource partitioning if the perturbed utility parameter is better than the pre-perturbed utility parameter plus a threshold amount. Likewise, the method 1000 can infer that network utility is optimized by retaining the perturbed partitioning if the perturbed utility parameter is within a threshold level of the pre-perturbed utility parameter. As a further option, the method 1000 can infer that network utility is optimized by reverting to pre-perturbed partitioning if the perturbed utility parameter is worse than the pre-perturbed utility parameter plus the threshold amount.

At 1020, method 1000 can set an event flag or timer flag. At 1022, a timer or event detection loop is initiated, such that at 1024, method 1000 returns to reference number 1022 if the timer/event flag is false, or returns to reference number 1002 if the timer/event flag is true. Accordingly, once a suitable event is detected, or the timer flag expires, method 1000 can be re-executed to further perturb resource assignments for the wireless network access point(s) or access terminal(s), as described above.

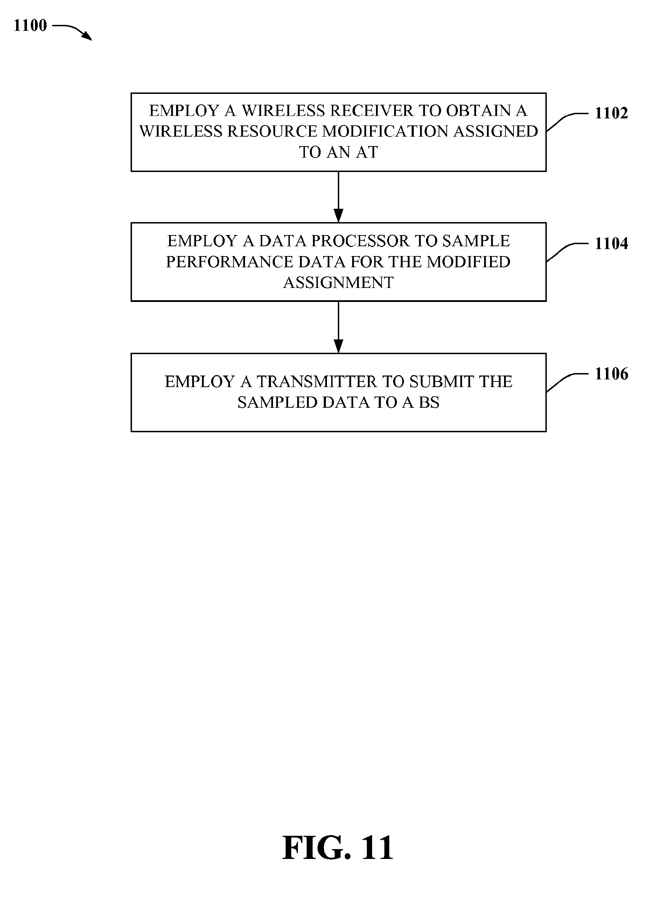

**Fig. 11** illustrates a flowchart of an example methodology 1100 for facilitating improved wireless network resource partitioning according to one or more aspects of the subject disclosure. At 1102, method 1100 can employ a wireless receiver to obtain a modification to wireless resources assigned to an AT by a wireless network. At 1104, method 1100 can employ a data processor to sample performance data for the modified wireless resource assignment. Additionally, at 1106, method 1100 can employ a wireless transmitter to submit the sampled performance data to a base station of the wireless network. The base station can be a base station serving the AT, or can be a non-serving base station within the serving cell, or a neighboring cell. Additionally, a response to the submission can revert the AT to a pre-modified wireless resource assignment, or maintain the modified assignment, based at least in part on the sampled performance data. Accordingly, method 1100 can provide improved resource assignments for the AT by comparing performance data for respective assignments.

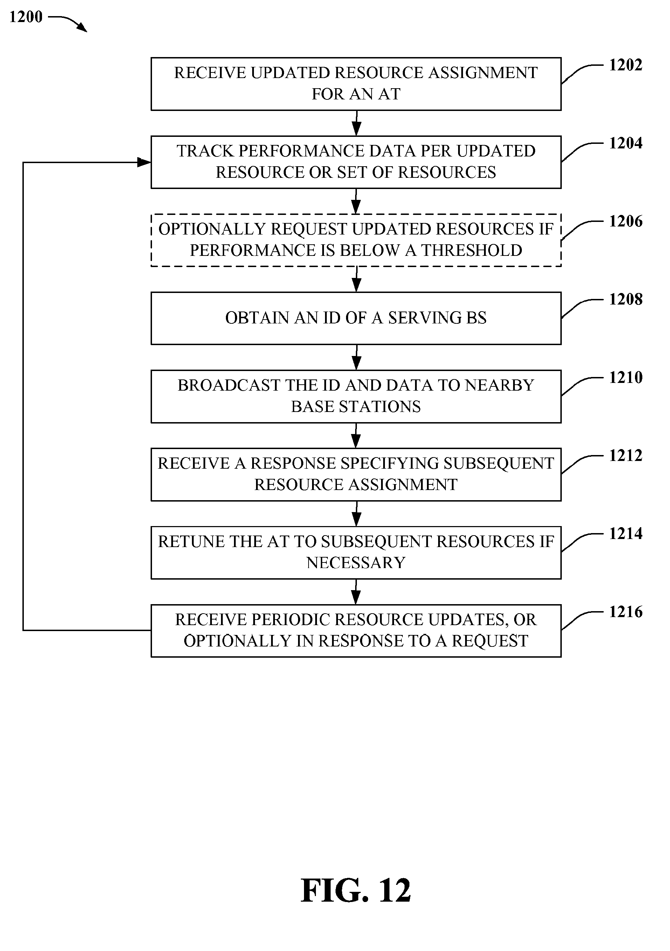

**Fig. 12** illustrates a flowchart of a sample methodology 1200 for facilitating optimized resource allocation in wireless communications. At 1202, method 1200 can received an updated resource assignment for an AT. At 1204, method 1200 can track performance data per updated resource or set of resources. The performance data can be determined from one or more measurable criteria, including throughput, latency, interference, SNR, antenna gain, or the like, or a combination thereof.

Further to the above, at 1206, method 1200 can optionally request an updated resource assignment from a serving base station, if the tracked performance at reference number 1204 is below a threshold performance level. At 1208, method 1200 can obtain an identifier (ID) of the serving base station. At 1210, method 1200 can broadcast the ID and performance data to nearby base stations, on UL resources provided by the updated resource assignment. Additionally, at 1212, method 1200 can receive a response to the broadcast specifying a subsequent resource assignment. At 1214, method 1200 can retune the AT to specified resources of the subsequent resource assignment, if necessary (*e.g*., if the subsequent resource assignment differs from the updated resource assignment obtained at reference number 1202). Furthermore, at 1216, method 1200 can receive periodic resource assignment updates, or optionally can receive one or more of the resource assignment updates as a response to a resource update request. Method 1200 can then return to reference number 1204 to track performance metric data for the updated assignment(s), achieving a steady-state optimization of resources based on performance metric data for respective resource assignments.

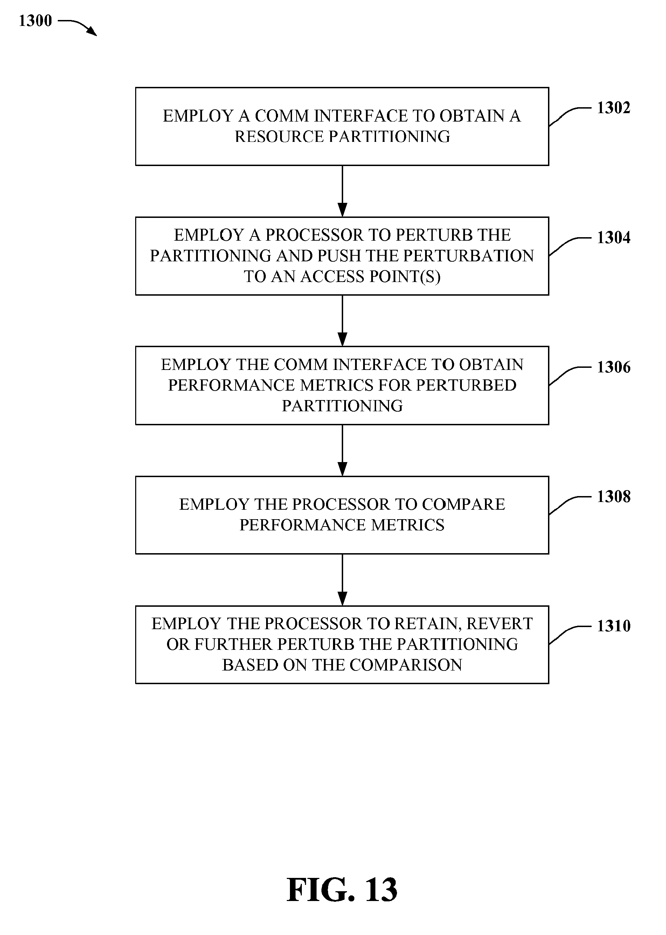

Fig. 13 illustrates a flowchart of an example methodology for optimizing wireless network resource partitioning according to particular aspects of the subject disclosure. At 1302, method 1300 can employ a communication interface for obtaining an existing resource partitioning for a set of wireless links. The communication interface can be a wired or wireless interface. For instance, the interface can be a cellular interface in which the existing resource partitioning is obtained at least in part over-the-air from an AT. In other aspects, the interface can be a wired or wireless backhaul interface over which the existing resource partitioning is obtained from a neighboring network access point (*e.g*., from a macro base station, or from a pico base station within a macro coverage area). In still other aspects, the interface can be a wired network interface (*e.g*., Ethernet, co-axial cable, RS-232, *etc.)* coupling a cellular network component with a cellular base station, over which the cellular base station provides the existing resource partitioning. In at least one aspect, the communication interface can be a physical bus coupled with memory storing the existing resource partitioning, and the partitioning can be obtained from memory over the physical bus. In yet other aspects, the existing resource partitioning can be generated at first instance at reference number 1302.

Further to the above, in at least one aspect, method 1300 further comprises conducting resource partitioning separately for UL and DL resource partitioning. In such case, UL or DL partitioning can be based on wireless conditions reported by an access point receiver or AT receiver, respectively, at reference number 1302. However, in alternative aspects, method 1300 can further comprise conducting UL and DL resource partitioning in common. In the latter aspects, the performance metric is an aggregate of UL and DL RF performance metrics (*e.g*., a weighted average of UL data rates and DL data rates).

At 1304, method 1300 can employ a data processor for perturbing the existing resource partitioning for subset of the wireless links and pushing the perturbation to one or more access points supporting the subset of links. In some aspects, triggering the perturbation of resource partitioning can be based on a detected change in network topology, or a change in resource partitioning of a neighboring cell of a wireless network. Particularly, the change in network topology can comprise a change in traffic loading for the wireless links (*e.g*., including total traffic loading, or total number of ATs served by an access point), or change in number of the wireless links (*e.g*., including an AT roaming and establishing a new link, AT handover terminating a link and starting a new link, and so on). Where network topology triggers perturbation of resource partitioning, the method can further comprise coupling a handover instruction with at least one perturbation message pushed to at least one of the access points.

In one or more additional aspects, the triggering the perturbation of network resources can be implemented periodically for the set of wireless links. For periodic triggering, the method can further comprise employing a fixed period for the set of wireless links or alternatively can employ separate periods for respective links or respective access points. For instance, an asynchronous period can be employed, where the method establishes different perturbation triggering periods for different access points or different wireless links. As another example, a synchronous period can be employed where the method establishes a common perturbation triggering period for the set of wireless links. In either case, the method can optionally comprise offsetting the fixed period of separate period based on performance metrics of the set of links, respective links or respective access points. Offsetting can comprise lengthening the period for good performance metrics, or shortening the period for poor performance metrics, or a suitable combination thereof.

At 1306, method 1300 can comprise employing the communication interface for obtaining performance metrics from respective access points indicative of the perturbed resource partitioning. Performance metrics can comprise any suitable measure of network efficiency, quality or effectiveness described herein or known in the art. As discussed above, the performance metrics can be UL metrics, DL metrics, or a combination thereof. In addition, the performance metrics can be reported by each access point associated with the set of wireless links, relayed by a common network access point (*e.g*., a macro base station), or can be reported by one or more access points and ATs. At 1308, method 1300 can employ the data processor for comparing the performance metrics with pre-perturbed network metrics. Additionally, at 1310, method 1300 can employ the data processor for selecting to retain the perturbed partitioning, further perturb the partitioning, or revert to pre-perturbed resource partitioning based on the performance metric comparison.

**Figs. 14, 15** and **16** illustrate example systems 1400, 1500, 1600 for implementing and facilitating, respectively, improved timing analysis in wireless communications according to aspects of the subject disclosure. For example, systems 1400, 1500 and 1600 can reside at least partially within a wireless communication network and/or within a transmitter such as a node, base station, access point, user terminal, personal computer coupled with a mobile interface card, or the like. It is to be appreciated that systems 1400, 1500 and 1600 are represented as including functional blocks, which can be functional blocks that represent functions implemented by a processor, software, or combination thereof (*e.g*., firmware).

System 1400 can comprise a module 1402 for employing a communication interface to obtain loading information for a wireless network access point. Furthermore, system 1400 can comprise a module 1404 for employing a data processor to update a network utility model, based at least on access point loading and resource requirements, with the loading information. Further to the above, system 1400 can also comprise a module 1406 for employing the data processor to optimize a network utility parameter of the updated model by varying resource requirement variables. Additionally, the module 1406 can derive a modified resource assignment for the network access point that is correlated with the optimized parameter. The modified resource assignment can be implemented for the access point and tested to determine associated performance. If performance improves according to the modified resource assignment, such assignment can be maintained at least for a default period, or until a predetermined event is detected for updating resource assignments. If performance is not improved by the modified resource assignment, module 1406 can cause system 1400 to revert to a previous resource assignment for the default period (or until the predetermined event is detected).

System 1500 can comprise a module 1502 for employing a wireless receiver to obtain a modification to wireless resources assigned to an AT by a wireless network. Furthermore, system 1500 can comprise a module 1504 for employing a data processor to sample performance data for the modified resource assignment. Once a suitable sample of performance data is obtained, system 1500 initiates a module 1506 for employing a wireless transmitter to submit the sampled performance data to a base station of the wireless network. In response to the submission, module 1502 can employ the wireless receiver to obtain a response to the submission, wherein the response instructs system 1500 to cause the AT to revert to a pre-modified wireless resource assignment, or to maintain the modified resource assignment, based at least in part on the sampled performance data.

System 1600 that can facilitate optimized wireless resource partitioning according to particular aspects of the subject disclosure. System 1600 can comprise a module 1602 for employing a communication interface for obtaining an existing resource partitioning for a set of wireless links. The resource partitioning can describe wireless resource assignments, including frequency band(s), time sub-slot(s), OFDM symbol(s), antenna gain, or code spread factor, *etc.,* for respective wireless links of the set. Each respective wireless link typically includes a network access point wirelessly coupled with an AT, although other arrangements are possible (*e.g*., including relays, repeaters). Additionally, system 1600 can comprise a module 1604 for employing a data processor for perturbing the existing resource partitioning for a subset of the wireless links and pushing the perturbation to one or more access points supporting the subset of links.

Furthermore, system 1600 can comprise a module 1606 for employing the communication interface for obtaining performance metrics from respective access points indicative of the perturbed resource partitioning. The performance metrics can comprise any suitable measurement of wireless efficiency, quality or reliability, as described herein, and can further be parsed per UL or DL signal, per resource or set of resources, per access point or set of access points, per AT or set of ATs, and so on. In at least one aspect, a subset of the performance metrics can comprise predicted channel metrics based on wireless conditions observed at a receiver (*e.g*., access point receiver or AT receiver).

In addition to the foregoing, system 1600 can comprise a module 1608 for employing the data processor for comparing the performance metrics with pre-perturbed network metrics. Comparison can comprise updating inputs to a network utility model, and determining an effect of the updated inputs on a network utility parameter value. System 1600 can further comprise a module 1610 for employing the data processor for selecting to retain the perturbed partitioning, further perturb the partitioning or revert to pre-perturbed partitioning based on the performance metric comparison. As one particular example, selecting to retain, further perturb or revert to pre-perturbed partitioning can be based on a probabilistic function. For instance, one possible probabilistic function can be employed that assigns a probability to each of retaining, reverting or further perturbing the partitioning. The assigned probability can be based on a determined effect of the perturbation on the network utility parameter, above, in relation to a predicted network utility. For instance, highest utility can be inferred if a value of the network utility parameter is improved by a threshold amount as a result of the perturbed resource partitioning. Moderate utility can be inferred if the value of the network utility parameter is improved or worsened by less than the threshold amount as a result of the perturbed resource partitioning. Poor utility can be inferred if the value of the network utility parameter is worsened by more than the threshold amount as a result of the perturbed resource partitioning.

Further, the probabilistic function can correlate poor, moderate and highest network utility with reverting, retaining or further perturbing, respectively, the resource partitioning. As a specific example, module 1610 can correlate the inference of highest utility to an action of further perturbing the resource partitioning (assuming further perturbation could further improve utility), correlate the inference of moderate utility to an option of preserving the perturbed partitioning, and correlate the inference of poor utility to an option of reverting to a pre-perturbed partitioning. Each action is then assigned a probability of selection by the function, depending on the effect on network utility. The probabilities of selection sum to unity, and can decrease in magnitude for actions correlated to highest inferred utility, moderate inferred utility and poor inferred utility, respectively (*e.g*., 0.6 probability of selection for an action corresponding to highest inferred utility, 0.3 probability of selection for an action corresponding to moderate inferred utility, 0.1 probability of selection for an action corresponding to poor inferred utility). Thus, a highest probability is assigned to the action of retaining the perturbation if the effect on network utility was inferred to be 'moderate utility', and so on. In such a manner, module 1610 can select a resource partitioning most likely to improve the network utility, but utilizing unfixed probabilities that incorporate a chance of exploring other partitioning actions.

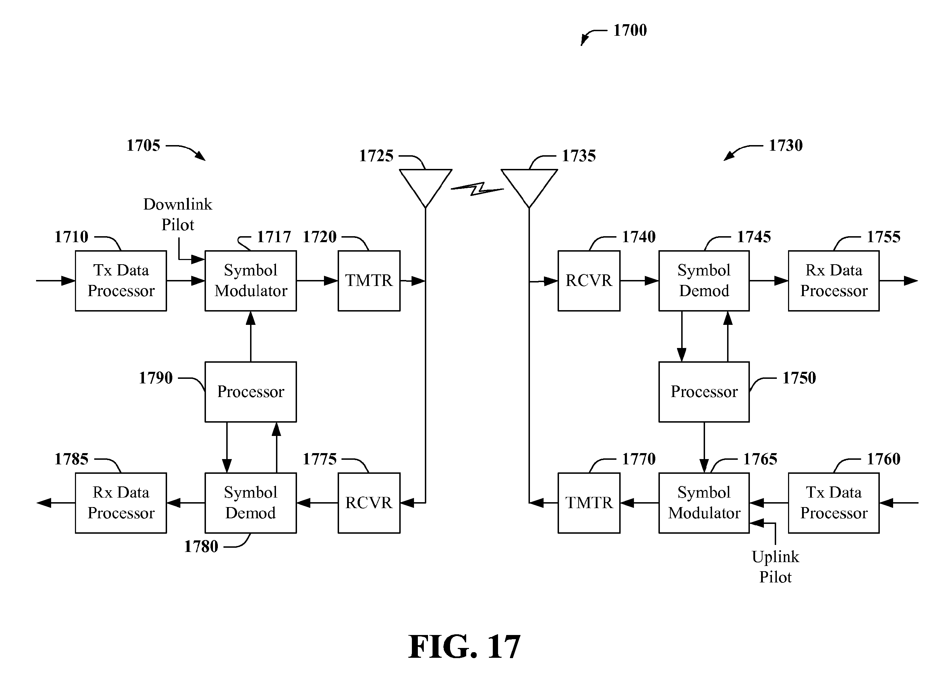

**Fig. 17** depicts a block diagram of an example system 1700 that can facilitate wireless communication according to some aspects disclosed herein. On a downlink, at access point 1705, a transmit (TX) data processor 1710 receives, formats, codes, interleaves, and modulates (or symbol maps) traffic data and provides modulation symbols ("data symbols"). A symbol modulator 1717 receives and processes the data symbols and pilot symbols and provides a stream of symbols. A symbol modulator 1720 multiplexes data and pilot symbols and provides them to a transmitter unit (TMTR) 1720. Each transmit symbol can be a data symbol, a pilot symbol, or a signal value of zero. The pilot symbols can be sent continuously in each symbol period. The pilot symbols can be frequency division multiplexed (FDM), orthogonal frequency division multiplexed (OFDM), time division multiplexed (TDM), code division multiplexed (CDM), or a suitable combination thereof or of like modulation and/or transmission techniques.

TMTR 1720 receives and converts the stream of symbols into one or more analog signals and further conditions (*e.g*., amplifies, filters, and frequency upconverts) the analog signals to generate a downlink signal suitable for transmission over the wireless channel. The downlink signal is then transmitted through an antenna 1725 to the terminals. At terminal 1730, an antenna 1735 receives the downlink signal and provides a received signal to a receiver unit (RCVR) 1740. Receiver unit 1740 conditions (*e.g*., filters, amplifies, and frequency downconverts) the received signal and digitizes the conditioned signal to obtain samples. A symbol demodulator 1745 demodulates and provides received pilot symbols to a processor 1750 for channel estimation. Symbol demodulator 1745 further receives a frequency response estimate for the downlink from processor 1750, performs data demodulation on the received data symbols to obtain data symbol estimates (which are estimates of the transmitted data symbols), and provides the data symbol estimates to an RX data processor 1755, which demodulates (*i.e*., symbol demaps), deinterleaves, and decodes the data symbol estimates to recover the transmitted traffic data. The processing by symbol demodulator 1745 and RX data processor 1755 is complementary to the processing by symbol modulator 1717 and TX data processor 1710, respectively, at access point 1705.

On the uplink, a TX data processor 1760 processes traffic data and provides data symbols. A symbol modulator 1765 receives and multiplexes the data symbols with pilot symbols, performs modulation, and provides a stream of symbols. A transmitter unit 1770 then receives and processes the stream of symbols to generate an uplink signal, which is transmitted by the antenna 1735 to the access point 1705. Specifically, the uplink signal can be in accordance with SC-FDMA requirements and can include frequency hopping mechanisms as described herein.

At access point 1705, the uplink signal from terminal 1730 is received by the antenna 1725 and processed by a receiver unit 1775 to obtain samples. A symbol demodulator 1780 then processes the samples and provides received pilot symbols and data symbol estimates for the uplink. An RX data processor 1785 processes the data symbol estimates to recover the traffic data transmitted by terminal 1730. A processor 1790 performs channel estimation for each active terminal transmitting on the uplink. Multiple terminals can transmit pilot concurrently on the uplink on their respective assigned sets of pilot sub-bands, where the pilot sub-band sets can be interlaced.

Processors 1790 and 1750 direct *(e.g.,* control, coordinate, manage, *etc.)* operation at access point 1705 and terminal 1730, respectively. Respective processors 1790 and 1750 can be associated with memory units (not shown) that store program codes and data. Processors 1790 and 1750 can also perform computations to derive frequency and impulse response estimates for the uplink and downlink, respectively.

For a multiple-access system (*e.g*., SC-FDMA, FDMA, OFDMA, CDMA, TDMA, *etc.),* multiple terminals can transmit concurrently on the uplink. For such a system, the pilot sub-bands can be shared among different terminals. The channel estimation techniques can be used in cases where the pilot sub-bands for each terminal span the entire operating band (possibly except for the band edges). Such a pilot sub-band structure would be desirable to obtain frequency diversity for each terminal. The techniques described herein can be implemented by various means. For example, these techniques can be implemented in hardware, software, or a combination thereof. For a hardware implementation, which can be digital, analog, or both digital and analog, the processing units used for channel estimation can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (*e.g*., procedures, functions, and so on) that perform the functions described herein. The software codes can be stored in memory unit and executed by the processors 1790 and 1750.

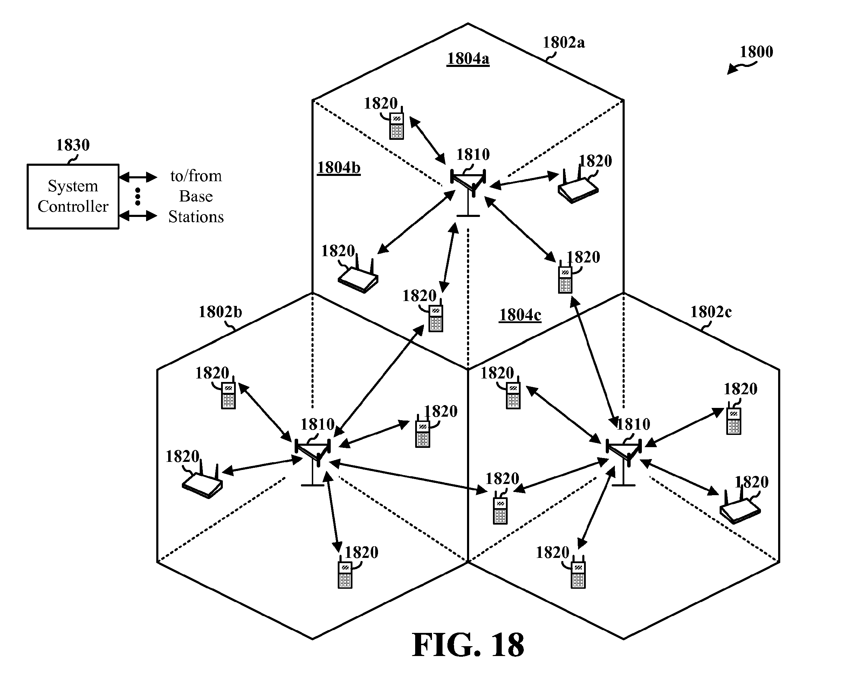

**Fig. 18** illustrates a wireless communication system 1800 with multiple base stations (BSs) 1810 (*e.g*., wireless access points, wireless communication apparatus) and multiple terminals 1820 (*e.g*., ATs), such as can be utilized in conjunction with one or more aspects. A BS (1810) is generally a fixed station that communicates with the terminals and can also be called an access point, a Node B, or some other terminology. Each BS 1810 provides communication coverage for a particular geographic area or coverage area, illustrated as three geographic areas in **Fig. 18**, labeled 1802a, 1802b, and 1802c. The term "cell" can refer to a BS or its coverage area depending on the context in which the term is used. To improve system capacity, a BS geographic area/coverage area can be partitioned into multiple smaller areas (*e.g*., three smaller areas, according to cell 1802a in **Fig**. 18), 1804a, 1804b, and 1804c. Each smaller area (1804a, 1804b, 1804c) can be served by a respective base transceiver subsystem (BTS). The term "sector" can refer to a BTS or its coverage area depending on the context in which the term is used. For a sectorized cell, the BTSs for all sectors of that cell are typically co-located within the base station for the cell. The transmission techniques described herein can be used for a system with sectorized cells as well as a system with un-sectorized cells. For simplicity, in the subject description, unless specified otherwise, the term "base station" is used generically for a fixed station that serves a sector as well as a fixed station that serves a cell.

Terminals 1820 are typically dispersed throughout the system, and each terminal 1820 can be fixed or mobile. Terminals 1820 can also be called a mobile station, user equipment, a user device, wireless communication apparatus, an access terminal, a user terminal or some other terminology. A terminal 1820 can be a wireless device, a cellular phone, a personal digital assistant (PDA), a wireless modem card, and so on. Each terminal 1820 can communicate with zero, one, or multiple BSs 1810 on the downlink (*e.g*., FL) and uplink (*e.g*., RL) at any given moment. The downlink refers to the communication link from the base stations to the terminals, and the uplink refers to the communication link from the terminals to the base stations.

For a centralized architecture, a system controller 1830 couples to base stations 1810 and provides coordination and control for BSs 1810. For a distributed architecture, BSs 1810 can communicate with one another as needed (*e.g*., by way of a wired or wireless backhaul network communicatively coupling the BSs 1810). Data transmission on the forward link often occurs from one access point to one access terminal at or near the maximum data rate that can be supported by the forward link or the communication system. Additional channels of the forward link (*e.g*., control channel) can be transmitted from multiple access points to one access terminal. Reverse link data communication can occur from one access terminal to one or more access points.

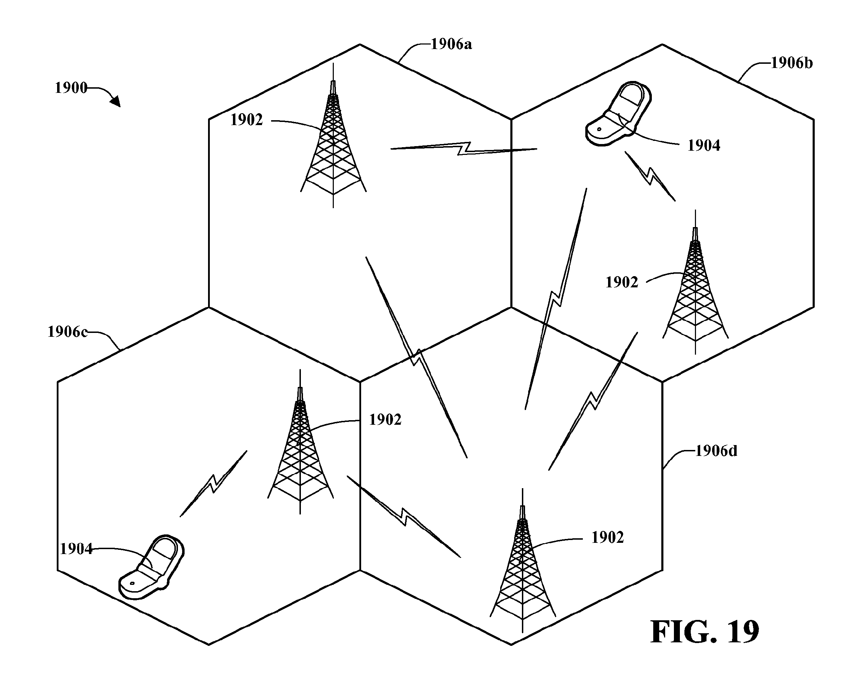

**Fig. 19** is an illustration of a planned or semi-planned wireless communication environment 1900, in accordance with various aspects. System 1900 can comprise one or more BSs 1902 in one or more cells and/or sectors that receive, transmit, repeat, *etc*., wireless communication signals to each other and/or to one or more mobile devices 1904. As illustrated, each BS 1902 can provide communication coverage for a particular geographic area, illustrated as four geographic areas, labeled 1906a, 1906b, 1906c and 1906d. Each BS 1902 can comprise a transmitter chain and a receiver chain, each of which can in turn comprise a plurality of components associated with signal transmission and reception (*e.g*., processors, modulators, multiplexers, demodulators, demultiplexers, antennas, and so forth, see **Fig. 7**, *supra*), as will be appreciated by one skilled in the art. Mobile devices 1904 can be, for example, cellular phones, smart phones, laptops, handheld communication devices, handheld computing devices, satellite radios, global positioning systems, PDAs, or any other suitable device for communicating over wireless communication environment 1900. System 1900 can be employed in conjunction with various aspects described herein in order to facilitate improved resource management in wireless communications, as set forth herein.

As used in the subject disclosure, the terms "component," "system," "module" and the like are intended to refer to a computer-related entity, either hardware, software, software in execution, firmware, middle ware, microcode, and/or any combination thereof. For example, a module can be, but is not limited to being, a process running on a processor, a processor, an object, an executable, a thread of execution, a program, a device, and/or a computer. One or more modules can reside within a process, or thread of execution; and a module can be localized on one electronic device, or distributed between two or more electronic devices. Further, these modules can execute from various computer-readable media having various data structures stored thereon. The modules can communicate by way of local or remote processes such as in accordance with a signal having one or more data packets *(e.g.,* data from one component interacting with another component in a local system, distributed system, or across a network such as the Internet with other systems by way of the signal). Additionally, components or modules of systems described herein can be rearranged, or complemented by additional components/modules/systems in order to facilitate achieving the various aspects, goals, advantages, *etc.,* described with regard thereto, and are not limited to the precise configurations set forth in a given figure, as will be appreciated by one skilled in the art.

Furthermore, various aspects are described herein in connection with a user equipment (UE). A UE can also be called a system, a subscriber unit, a subscriber station, mobile station, mobile, mobile communication device, mobile device, remote station, remote terminal, access terminal (AT), user agent (UA), a user device, or user terminal (UE). A subscriber station can be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem or similar mechanism facilitating wireless communication with a processing device.

In one or more exemplary embodiments, the functions described can be implemented in hardware, software, firmware, middleware, microcode, or any suitable combination thereof. If implemented in software, the functions can be stored on or transmitted over as one or more instructions or code on a computer-readable medium. Computer-readable media includes both computer storage media and communication media including any medium that facilitates transfer of a computer program from one place to another. A storage media may be any physical media that can be accessed by a computer. By way of example, and not limitation, such computer storage media can comprise RAM, ROM, EEPROM, CD-ROM or other optical disk storage, magnetic disk storage or other magnetic storage devices, smart cards, and flash memory devices (*e.g*., card, stick, key drive...), or any other medium that can be used to carry or store desired program code in the form of instructions or data structures and that can be accessed by a computer. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

For a hardware implementation, the processing units' various illustrative logics, logical blocks, modules, and circuits described in connection with the aspects disclosed herein can be implemented or performed within one or more ASICs, DSPs, DSPDs, PLDs, FPGAs, discrete gate or transistor logic, discrete hardware components, general purpose processors, controllers, micro-controllers, microprocessors, other electronic units designed to perform the functions described herein, or a combination thereof. A general-purpose processor can be a microprocessor, but, in the alternative, the processor can be any conventional processor, controller, microcontroller, or state machine. A processor can also be implemented as a combination of computing devices, *e.g*., a combination of a DSP and a microprocessor, a plurality of microprocessors, one or more microprocessors in conjunction with a DSP core, or any other suitable configuration. Additionally, at least one processor can comprise one or more modules operable to perform one or more of the steps and/or actions described herein.

Moreover, various aspects or features described herein can be implemented as a method, apparatus, or article of manufacture using standard programming and/or engineering techniques. Further, the steps and/or actions of a method or algorithm described in connection with the aspects disclosed herein can be embodied directly in hardware, in a software module executed by a processor, or in a combination of the two. Additionally, in some aspects, the steps or actions of a method or algorithm can reside as at least one or any combination or set of codes or instructions on a machine-readable medium, or computer-readable medium, which can be incorporated into a computer program product. The term "article of manufacture" as used herein is intended to encompass a computer program accessible from any suitable computer-readable device or media.

Additionally, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Furthermore, as used herein, the terms to "infer" or "inference" refer generally to the process of reasoning about or inferring states of the system, environment, or user from a set of observations as captured *via* events, or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events, or data. Such inference results in the construction of new events or actions from a set of observed events and/or stored event data, whether or not the events are correlated in close temporal proximity, and whether the events and data come from one or several event and data sources.

What has been described above includes examples of aspects of the claimed subject matter. It is, of course, not possible to describe every conceivable combination of components or methodologies for purposes of describing the claimed subject matter, but one of ordinary skill in the art may recognize that many further combinations and permutations of the disclosed subject matter are possible. Accordingly, the disclosed subject matter is intended to embrace all such alterations, modifications and variations that fall within the spirit and scope of the appended claims. Furthermore, to the extent that the terms "includes," "has" or "having" are used in either the detailed description or the claims, such terms are intended to be inclusive in a manner similar to the term "comprising" as "comprising" is interpreted when employed as a transitional word in a claim.
The following numbered clauses are hereby included to give further description of embodiments of the invention:
1. A method for dynamic resource partitioning in wireless communication, comprising:
   employing a communication interface to obtain a performance metric for a wireless network access point;
   employing a data processor to update inputs to a network utility model with the performance metric, wherein the utility model is a function of resource partitioning and performance metrics of a set of wireless links at least in part involving the access point; and
   employing the data processor to select a resource partitioning for the wireless network access point that optimizes a network utility parameter of the model.
2. The method of clause 1, further comprising updating radio frequency (RF) conditions for the network access point consistent with the selected resource partitioning, and receiving performance data for the updated RF conditions.
3. The method of clause 2, further comprising employing the performance data as input to update the model and re-optimize the utility parameter.
4. The method of clause 1, further comprising triggering the dynamic resource partitioning periodically or upon occurrence of an event.
5. The method of clause 4, further comprising employing at least one of the following as a trigger event:
   an AT entering or leaving an area served by the wireless network access point;
   AT handoff to or from the access point;
   a change in resource partitioning in a neighboring cell; or
   a change in amount of traffic loading at the access point.
6. The method of clause 4, further comprising employing a synchronous or asynchronous period, relative to a set of access points that includes the network access point, for the periodic triggering.
7. The method of clause 6, further comprising lengthening or shortening a default asynchronous period employed for the network access point based at least in part on the performance metric.
8. The method of clause 1 implemented at the network access point, at a master access point or at a central access point controller.
9. The method of clause 8, further comprising obtaining access point loading or resource requirement information from a neighboring access point *via* an inter-access point backhaul network and updating network utility model inputs or triggering dynamic resource partitioning at least in part based on the information.
10. The method of clause 8, further comprising at least one of:
   pushing the selected resource partitioning to subservient access points for the master access point or central access point controller implementation; or
   pushing the selected resource partitioning to an AT served by the network access point.
11. The method of clause 1, further comprising activating a set of network efficiency protocols for the network utility model that mitigate interference in a heterogeneous access point environment by reserving distinct sets of orthogonal wireless resources for distinct classifications of access points.
12. The method of clause 11, wherein the set of network efficiency protocols are designed for a particular macro environment and provide resource allocation rules for different classifications of network access points.
13. The method of clause 12, wherein:
   selecting the resource partitioning further comprises classifying the network access point as a macro, pico, femto or relay base station; and
   referencing the efficiency protocols to determine whether particular resources should be assigned for the network access point based on the access point class.
14. The method of clause 1, wherein the performance metric is an UL signal metric, a DL signal metric, or an aggregate thereof, and the resource partitioning specifies UL or DL resource assignments.
15. The method of clause 14, wherein the performance metric is a weighted combination of UL and DL signals.
16. The method of clause 1, wherein the performance metric comprises a signal to noise ratio (SNR), a buffer size and throughput metric of an AT, power headroom of the AT, or interference at the AT, or a combination thereof.
17. The method of clause 1, wherein the performance metric comprises an SNR, throughput, data rate, latency, traffic loading, AT load or interference metric provided by the wireless network access point.
18. The method of clause 1, further comprising predicting a performance metric for the selected resource partitioning based on resource perturbation, wherein the resource perturbation further comprises:
   perturbing the selected resource partitioning for a subset of the wireless links and pushing the perturbation to one or more access points supporting the subset of links;
   obtaining performance metrics from respective access points indicative of the perturbed resource partitioning;
   updating the model with the perturbed performance metrics and comparing values of perturbed and pre-perturbed network utility parameter; and
   selecting to retain the perturbed partitioning, further perturb the partitioning or revert to pre-perturbed resource partitioning based on the performance metric comparison.
19. The method of clause 18, further comprising calculating a probability of improving the network utility parameter based on the comparison and employing the probability relative a set of probability thresholds for selecting between the retaining, reverting or further perturbing the resource partitioning.
20. The method of clause 18, further comprising inferring that network utility is optimized by:
   further perturbing resource partitioning if the perturbed utility parameter is better than the pre-perturbed utility parameter plus a threshold amount;
   retaining the perturbed partitioning if the perturbed utility parameter is within a threshold level of the pre-perturbed utility parameter; or
   reverting to pre-perturbed partitioning if the perturbed utility parameter is worse than the pre-perturbed utility parameter plus the threshold amount.
21. The method of clause 18, further comprising employing a probabilistic model to select between options of reverting, retaining or further perturbing the partitioning, wherein:
   the probabilistic model assigns highest probability to an option having highest inferred utility, with probability of all options summing to unity; and
   a likelihood that one option is selected is proportional to that option's assigned probability.
22. An apparatus that provides dynamic resource partitioning for a wireless network, comprising:
   a network interface module for obtaining network performance metric data;
   memory for storing a set of modules configured to dynamically partition wireless resources among a set of wireless access point and AT links; and
   a data processor for executing the modules, the set of modules comprising:
      a collection module that aggregates network performance data provided by respective wireless access points of the set;
      a perturbation module that modifies a resource assignment for at least one of the respective access points based on the performance data, where the modified assignment is transmitted to the at least one access point for implementation.
23. The apparatus of clause 22, further comprising a comparison module that outputs an optimal resource assignment based on comparison of perturbed and pre-perturbed network performance data.
24. The apparatus of clause 22, wherein the optimal resource assignment is calculated by maximizing one or more UL or DL performance metrics.
25. The apparatus of clause 24 wherein the performance metrics comprise at least one of a path-loss metric, an antenna gain metric, a traffic loading or buffer size metric, or a throughput or latency metric pertaining to a set of access points or access terminals.
26. The apparatus of clause 24, wherein the performance metrics are parsed per resource, per base station or per access terminal, or a combination thereof.
27. The apparatus of clause 26, wherein the performance metrics at least in part comprise a channel metric measured at an AT or an aggregate of channel metrics measured at respective ATs of a set of ATs.
28. The apparatus of clause 26, further comprising a steady-state module that periodically re-executes the set of modules to maintain optimal resource assignment for dynamic network performance conditions.
29. The apparatus of clause 28, wherein the period is synchronous for the set of wireless access points.
30. The apparatus of clause 28, wherein the period is asynchronous for the set of wireless access points, and at least one access point re-executes dynamic partitioning at a different period from another access point of the set.
31. The apparatus of clause 28, wherein the period is generated by a random or pseudo-random function and is common for the set of wireless access points, or generated separately at respective access points of the set.
32. The apparatus of clause 28, wherein the pseudo-random function is employed for determining the period, and further wherein the pseudo-random function is weighted to delay or shorten a randomly generated period based on current network performance.
33. The apparatus of clause 22, further comprising an event module that initiates execution of the perturbation module based on one of:
   a change in network topology; or
   a change in resource partitioning of a neighboring cell, relative the apparatus.
34. The apparatus of clause 22, wherein:
   the perturbation module further modifies the selected resource partitioning for a subset of the wireless links and pushes the modified selected partitioning to one or more access points supporting the subset of links;
   the collection module obtains performance metrics from respective access points indicative of the modified selected partitioning and updates inputs to a model of network utility with these performance metrics; and further comprising:
      a comparison module that selects to retain, revert or further modify the modified selected partitioning based on comparison of a value of a network utility parameter output by the model and a previous value of the parameter.
35. An apparatus for dynamic resource partitioning in wireless communication, comprising:
   means for employing a communication interface to obtain performance information for a wireless network access point;
   means for employing a data processor to update inputs to a network utility model with the performance information, wherein the utility model is a function of resource partitioning and performance metrics of a set of wireless links at least in part involving the access point; and
   means for employing the data processor to select a resource partitioning for the wireless network access point that optimizes a network utility parameter of the model.
36. At least one processor configured for dynamic resource partitioning in wireless communication, comprising:
   a first module for obtaining performance information for a wireless network access point;
   a second module for updating inputs to a network utility model with the performance information, wherein the utility model is a function of resource partitioning and performance metrics of a set of wireless links at least in part involving the access point; and
   a third module for selecting a resource partitioning for the wireless network access point that optimizes a network utility parameter of the model.
37. A computer program product, comprising:
   a computer-readable medium, comprising:
      a first set of codes for causing a computer to obtain performance information for a wireless network access point;
      a second set of codes for causing the computer to update inputs to a network utility model with the performance information, wherein the utility model is a function of resource partitioning and performance metrics of a set of wireless links at least in part involving the access point;
      a third set of codes for causing the computer to select a resource partitioning for the wireless network access point that optimizes a network utility parameter of the model.
38. A method for wireless communications, comprising:
   employing a wireless receiver to obtain a modification to wireless resources assigned to an access terminal (AT) by a wireless network;
   employing a data processor to sample performance data for the modified wireless resource assignment based on RF conditions observed at the AT; and
   employing a wireless transmitter to submit the sampled performance data to a BS of the wireless network, wherein a response to the submission reverts the AT to a pre-modified wireless resource assignment, or maintains the modified assignment, based at least in part on the sampled performance data.
39. The method of clause 38, further comprising receiving periodic resource assignment modifications and replying with performance data submissions for respective modifications.
40. The method of clause 39, wherein the period modifications comprise a fixed period, a random period, or a variable period depending on sampled performance data.
41. The method of clause 38, further comprising submitting a request for a change in wireless resource assignment if wireless performance drops below a threshold level.
42. The method of clause 38, wherein sampling the performance data further comprises calculating a latency, pathloss, buffer size, antenna gain, interference, or throughput metric for downlink (DL) transmissions received by the AT.
43. The method of clause 38, wherein the response to the submissions is also based at least in part on a latency, pathloss, throughput, interference or antenna gain metric of uplink (UL) transmissions transmitted by the AT.
44. The method of clause 38, wherein the response to the submission is based on a weighted average of UL and DL performance metric data.
45. The method of clause 38, further comprising sampling performance data separately for different wireless resources and submitting the performance data per resource, or per group of resources.
46. The method of clause 38, further comprising submitting the sampled performance data to a set of wireless network BSs, including a serving BS and one or more non-serving BSs.
47. The method of clause 38, further comprising reporting an ID of a BS serving the AT to the BS of the wireless network.
48. The method of clause 47, wherein selection of resources for the modified or pre-modified resource assignment is based at least in part on a type of the serving BS, and further wherein the type is one of macro, femto, pico or relay BS.
49. An apparatus for facilitating improved wireless communication, comprising:
   a memory that stores a set of modules configured to facilitate dynamic resource assignment for wireless communication;
   a data processor for executing the set of modules, which comprises:
      a resource module that analyzes a received wireless message to identify changes in wireless resource assignments sent by a serving wireless network;
      a configuration module that tunes a transceiver of the apparatus according to changes identified by the resource module; and
      a measurement module that samples performance data based on RF conditions observed at the apparatus and facilitates performance evaluation of the changed wireless resources.
50. The apparatus of clause 49, wherein a response to the evaluation preserves the changes, reverses the changes or further changes the resource assignment based on the performance evaluation.
51. The apparatus of clause 49, further comprising a timing module that causes the resource module to periodically analyze transmissions of the wireless network for changes in wireless resource assignments.
52. The apparatus of clause 51, wherein the period is provided by the wireless network and is either fixed or modified based on the performance evaluation.
53. The apparatus of clause 49, wherein the performance data comprises a latency, pathloss, buffer size, interference, or throughput metric for downlink (DL) transmissions received by the apparatus.
54. The apparatus of clause 49, wherein a response to the evaluation is also based at least in part on a latency, pathloss, throughput, interference or antenna gain metric of uplink (UL) transmissions transmitted by the AT.
55. The apparatus of clause 49, wherein a response to the evaluation is based on performance metric data for both UL and DL activity of the apparatus.
56. The apparatus of clause 49, further comprising an interface module that forwards wireless messages from a serving BS to a neighboring BS, or *vice versa,* to facilitate sharing network topology or wireless performance data among the BSs for dynamic resource assignment.
57. The apparatus of clause 49, further comprising a determination module that executes the performance evaluation at least for DL signaling received at the apparatus.
58. The apparatus of clause 57, further comprising a selection module that generates a modified set of DL resources for the apparatus based on the performance evaluation, and submits a request to a serving BS to employ the DL resources.
59. The apparatus of clause 49, wherein the resource module obtains a set of UL resources dynamically determined from evaluation of UL performance metrics of the apparatus and one or more wireless ATs served by the wireless network.
60. An apparatus for wireless communications, comprising:
   means for employing a wireless receiver to obtain a modification to wireless resources assigned to an AT by a wireless network;
   means for employing a data processor to sample performance data for the modified wireless resource assignment based on RF conditions observed at the AT; and
   means for employing a wireless transmitter to submit the sampled performance data to a BS of the wireless network, wherein a response to the submission reverts the AT to a pre-modified wireless resource assignment, or maintains the modified assignment, based at least in part on the sampled performance data.
61. At least one processor configured for improved wireless communication, comprising:
   a first module that obtains a modification to wireless resources assigned to an AT by a wireless network;
   a second module that samples performance data for the modified wireless resource assignment based on RF conditions observed at the AT; and
   a third module that submits the sampled performance data to a BS of the wireless network, wherein a response to the submission reverts the AT to a pre-modified wireless resource assignment, or maintains the modified assignment, based at least in part on the sampled performance data.
62. A computer program product, comprising:
   a computer-readable medium, comprising:
      a first set of codes for causing a computer to obtain a modification to wireless resources assigned to an AT by a wireless network;
      a second set of codes for causing the computer to sample performance data for the modified wireless resource assignment based on RF conditions observed at the AT; and
      a third set of codes for causing the computer to submit the sampled performance data to a BS of the wireless network, wherein a response to the submission reverts the AT to a pre-modified wireless resource assignment, or maintains the modified assignment, based at least in part on the sampled performance data.
63. A computer-implemented method for dynamic resource partitioning, comprising:
   employing a communication interface for obtaining an existing resource partitioning for a set of wireless links;
   employing a data processor for perturbing the existing resource partitioning for a subset of the wireless links and pushing the perturbation to one or more access points supporting the subset of links;
   employing the communication interface for obtaining performance metrics from respective access points indicative of the perturbed resource partitioning;
   employing the data processor for comparing the performance metrics with pre-perturbed network metrics; and
   employing the data processor for selecting to retain the perturbed partitioning, further perturb the partitioning or revert to pre-perturbed resource partitioning based on the performance metric comparison.
64. The method of clause 63, further comprising triggering the perturbation of resource partitioning based on a detected change in network topology or a change in resource partitioning of a neighboring cell of a wireless network.
65. The method of clause 64, wherein the change in network topology comprises a change in traffic loading for the wireless links or change in number of the wireless links.
66. The method of clause 63, further comprising coupling a handover instruction with at least one perturbation message pushed to at least one of the access points.
67. The method of clause 63, further comprising triggering the perturbation of network resources periodically for the set of wireless links.
68. The method of clause 67, further comprising employing a fixed period for the set of wireless links or separate periods for respective links or respective access points.
69. The method of clause 68, further comprising offsetting the fixed period or separate periods based on performance metrics of the set of links, respective links, or respective access points.
70. The method of clause 63, further comprising conducting resource partitioning separately for UL and DL resource partitioning.
71. The method of clause 63, further comprising conducting UL and DL resource partitioning in common.
72. The method of clause 71, wherein the performance metric is an aggregate of UL and DL RF performance metrics.
73. An apparatus that provides dynamic resource partitioning for a wireless network, comprising:
   a network interface module for obtaining network performance metric data for a set of wireless links;
   memory for storing a set of modules configured to dynamically partition wireless resources among the set of wireless links; and
   a data processor for executing the modules, the set of modules comprising:
      a perturbation module that modifies a resource assignment for at least one of the respective wireless links;
      a collection module that aggregates network performance data for the modified resource assignment; and
      a comparison module that outputs a resource assignment based on comparison of perturbed and pre-perturbed network performance data.
74. The apparatus of clause 73, further comprising a steady-state module that periodically re-executes the set of modules to maintain optimal resource assignment for dynamic network performance conditions.
75. The apparatus of clause 73, wherein the period is synchronous for the set of wireless links.
76. The apparatus of clause 75, wherein the period is asynchronous for the set of wireless links, wherein dynamic partitioning is implemented for at least one of the links at a different period from another link of the set.
77. The apparatus of clause 75, wherein the period is generated by a random or pseudo-random function and is common for the set of wireless links, or generated separately at respective access points of the set.
78. The apparatus of clause 77, wherein the pseudo-random function provides a baseline period that is weighted longer or shorter based on the performance data.
79. The apparatus of clause 73, further comprising an event module that initiates execution of the perturbation module based on one of:
   a change in network topology; or
   a change in resource partitioning of a neighboring cell, relative the apparatus.
80. The apparatus of clause 73, wherein the perturbation is performed separately for UL and DL signals.
81. The apparatus of clause 73, wherein the perturbation is performed in common for UL and DL signals.
82. The apparatus of clause 81, wherein the performance metric data is an aggregate of UL and DL performance metrics.
83. An apparatus for dynamic resource partitioning, comprising:
   means for employing a communication interface for obtaining an existing resource partitioning for a set of wireless links;
   means for employing a data processor for perturbing the existing resource partitioning for a subset of the wireless links and pushing the perturbation to one or more access points supporting the subset of links;
   means for employing the communication interface for obtaining performance metrics from respective access points indicative of the perturbed resource partitioning;
   means for employing the data processor for comparing the performance metrics with pre-perturbed network metrics; and
   means for employing the data processor for selecting to retain the perturbed partitioning, further perturb the partitioning or revert to pre-perturbed resource partitioning based on the performance metric comparison.
84. At least one processor configured for dynamic resource partitioning, comprising:
   a first module for obtaining an existing resource partitioning for a set of wireless links;
   a second module for perturbing the existing resource partitioning for a subset of the wireless links and pushing the perturbation to one or more access points supporting the subset of links;
   a third module for obtaining performance metrics from respective access points indicative of the perturbed resource partitioning;
   a fourth module for comparing the performance metrics with pre-perturbed network metrics; and
   a fifth module for selecting to retain the perturbed partitioning, further perturb the partitioning or revert to pre-perturbed resource partitioning based on the performance metric comparison.
85. A computer program product, comprising:
   a computer-readable medium, comprising:
      a first set of codes for causing a computer to obtain an existing resource partitioning for a set of wireless links;
      a second set of codes for causing the computer to perturb the existing resource partitioning for a subset of the wireless links and push the perturbation to one or more access points supporting the subset of links;
      a third set of codes for causing the computer to obtain performance metrics from respective access points indicative of the perturbed resource partitioning;
      a fourth set of codes for causing the computer to compare the performance metrics with pre-perturbed network metrics; and
      a fifth set of codes for causing the computer to select to retain the perturbed partitioning, further perturb the partitioning or revert to pre-perturbed resource partitioning based on the performance metric comparison.

## Claims

1. A method for wireless communications, comprising:
employing a wireless receiver to obtain a modification to wireless resources assigned to an access terminal (AT) by a wireless network;
employing a data processor to sample performance data for the modified wireless resource assignment based on RF conditions observed at the AT; and
employing a wireless transmitter to submit the sampled performance data to a BS of the wireless network, wherein a response to the submission reverts the AT to a pre-modified wireless resource assignment, or maintains the modified assignment, based at least in part on the sampled performance data.

2. The method of claim 1, further comprising receiving periodic resource assignment modifications and replying with performance data submissions for respective modifications.

3. The method of claim 2, wherein the period modifications comprise a fixed period, a random period, or a variable period depending on sampled performance data.

4. The method of claim 1, further comprising submitting a request for a change in wireless resource assignment if wireless performance drops below a threshold level.

5. The method of claim 1, wherein sampling the performance data further comprises calculating a latency, pathloss, buffer size, antenna gain, interference, or throughput metric for downlink (DL) transmissions received by the AT.

6. The method of claim 1, wherein the response to the submissions is also based at least in part on a latency, pathloss, throughput, interference or antenna gain metric of uplink (UL) transmissions transmitted by the AT.

7. The method of claim 1, wherein the response to the submission is based on a weighted average of UL and DL performance metric data.

8. The method of claim 1, further comprising sampling performance data separately for different wireless resources and submitting the performance data per resource, or per group of resources.

9. The method of claim 1, further comprising submitting the sampled performance data to a set of wireless network BSs, including a serving BS and one or more non-serving BSs.

10. The method of claim 1, further comprising reporting an ID of a BS serving the AT to the BS of the wireless network.

11. The method of claim 10, wherein selection of resources for the modified or pre-modified resource assignment is based at least in part on a type of the serving BS, and further wherein the type is one of macro, femto, pico or relay BS.

12. An apparatus for wireless communications, comprising:
means for employing a wireless receiver to obtain a modification to wireless resources assigned to an AT by a wireless network;
means for employing a data processor to sample performance data for the modified wireless resource assignment based on RF conditions observed at the AT; and
means for employing a wireless transmitter to submit the sampled performance data to a BS of the wireless network, wherein a response to the submission reverts the AT to a pre-modified wireless resource assignment, or maintains the modified assignment, based at least in part on the sampled performance data.

13. A computer program product, comprising:
a computer-readable medium, comprising:
a first set of codes for causing a computer to obtain a modification to wireless resources assigned to an AT by a wireless network;
a second set of codes for causing the computer to sample performance data for the modified wireless resource assignment based on RF conditions observed at the AT; and
a third set of codes for causing the computer to submit the sampled performance data to a BS of the wireless network, wherein a response to the submission reverts the AT to a pre-modified wireless resource assignment, or maintains the modified assignment, based at least in part on the sampled performance data.
